# EUROPÄISCHE PATENTANMELDUNG

(11) **EP 2 711 869 A2**
(43) Veröffentlichungstag der Anmeldung: **26.03.2014**
(21) Anmeldenummer: 13185018.2
(22) Anmeldetag: 18.09.2013
(51) Int. Cl.: G06K 9/00

(54) **Verfahren und Vorrichtung zur Aufnahme von Fingerabdrücken auf Basis von Fingerabdruckscannern in zuverlässig hoher Qualität**

(30) Priorität: 19.09.2012 DE 102012108838
(71) Anmelder: Cross Match Technologies GmbH, 07743 Jena (DE)
(72) Erfinder: Wolfer, Roberto, 07749 Jena (DE); Bauermeister, Andreas, 99423 Weimar (DE)
(74) Vertreter: Freitag, Joachim

(57) **Zusammenfassung**

Die Erfindung betrifft ein Verfahren und eine Vorrichtung zur Aufnahme von Fingerabdrücken (13) auf Basis von Fingerabdruckscannern (5) in zuverlässig hoher Qualität.

Die Aufgabe der Erfindung, eine neue Möglichkeit zur Aufnahme von Fingerabdrücken (13) in ausreichend hoher Qualität zu finden, bei der verständliche Rückinformationen vom Aufnahmeprozess in Echtzeit erfolgen, sodass der Benutzer ohne aktive Anleitung erforderliche Korrekturen der Fingerauflage vornehmen kann, wird erfindungsgemäß gelöst, indem der Aufnahmeeinheit (1) eine Bildverarbeitungseinheit (2) nachgeordnet und der Aufnahmeeinheit (1) eine zweidimensionale Anzeigeeinheit (4) zugeordnet ist, die in Abhängigkeit von Ergebnissen der in der Bildverarbeitungseinheit (2) analysierten Fingerabdrücke (13) positive Echtzeitdarstellungen der auf der Aufnahmefläche (11) aufgelegten Finger aus einem Bildspeicher (3) mit einer Bibliothek aus einer Vielzahl von animierten Fingerpositionsbildern zur einfachen Benutzerführung zur Anzeige bringt.

## Beschreibung

Die Erfindung betrifft ein Verfahren und eine Vorrichtung zur Aufnahme von Fingerabdrücken auf Basis von Fingerabdruckscannern in zuverlässig hoher Qualität, insbesondere bei Fingerabdruckscannern für zivile Anwendungen, bei denen kein geschultes Bedienpersonal zur Verfügung steht.

In der Vergangenheit wurden Fingerabdrücke traditionell von staatlichen Vollstreckungsbehörden, wie Staatsanwaltschaft, Polizei- und Strafvollzugsbeamten, für Registrierungs-, Identifikations- und Beweiszwecke bei tatverdächtigen Personen vorgenommen. Als zivile Anwendungen sind neuerdings die Grenzkontrollen und Wähleridentifikationen hinzugekommen.
Während in Kriminalfällen nach wie vor die Aufnahme der Fingerabdrücke von gut ausgebildeten und erfahrenen Sicherheitsbeamten begleitet und durchgeführt wird, sind bei zivilen Anwendungen meist keine Fachleute bei der Aufnahme und Bewertung der Fingerabdrücke anwesend. Häufig werden die Fingerabdrücke für zivile Zwecke außerdem in Hochsicherheitsbereichen, wie Botschaften, Konsulaten und speziellen Bereichen von Flughäfen, aufgenommen, die einen physischen Kontakt zwischen dem Bediener des Aufnahmegerätes und der Person, von der Fingerabdrücke aufgenommen werden sollen, nicht gestatten. Deshalb muss die Person bei der Aufnahme ihrer Fingerabdrücke angeleitet werden, ohne dass ein Bediener des Aufnahmegerätes direkt zugegen ist.

Um den Fingeraufnahmeprozess in diesem Sinne zu vereinfachen und die nachfolgende Bewertung der Qualität der Fingerabdrücke zu objektivieren, d. h. von subjektiver visueller Bewertung zu befreien, wurden die Fingerabdruckscanner zunehmend mit Rückkopplungselementen ausgestattet. Beispiele für solche Rückkopplungselemente sind akustische Signalausgaben ( z. B. über Piepser, Lautsprecher), visuelle Anzeigen, wie Piktogramme, ein- oder mehrfarbige LEDs oder ortsbezogene Displays. Beispiele für derart ausgerüstete Fingerabdruck- oder Handscanner sind Geräte wie Guardian (Hersteller: Cross Match Technologies), RealScan G10 (Suprema), CS500e (Cogent) oder MorphoTop (Morpho). Jedoch setzen alle diese Geräte voraus, dass die Person, von der Fingerabdrücke genommen werden sollen, entweder durch einen Gerätebediener angeleitet wird oder bereits Erfahrungen mit einem Fingerabdruckscanner hat, sodass die Art und Weise des Fingerauflegens a priori korrekt ist und nur die qualitativen Ergebnisse der einzelnen Abdrücke angezeigt werden und gegebenenfalls zu Verbesserungen aufgefordert wird.
So können mehrfarbige LED-Anzeigen zwar wiedergeben, ob die Bildqualität eines Fingerabdrucks ausreichend gut ist oder nicht, aber sie können keinerlei Hilfestellung geben, welche Bedingungen geändert werden müssen, um eine hinreichende Qualität der Fingerabdrücke zu erreichen. Außerdem kann auch keine Anweisung gegeben werden, wo und wie welcher Finger auf der Aufnahmefläche des Geräts aufgelegt werden soll.
Rückkopplungselemente zur Anzeige der Abdruckqualität sind beispielsweise in der US 7277562 B2 offenbart, wobei die Anzeigeelemente durch Auswerteeinheiten der Steuersoftware getriggert werden. Obwohl die Aktivitäten des Benutzers analysiert werden und Ergebnisse angezeigt werden, um bestimmte weitere Anwendungen des Benutzers abzufordern, sind diese Anzeigeelemente nicht ausreichend, um dem Benutzer eine einfach verständliche Anleitung zu geben.

Eine vom NIST (National Institute of Standards and Technology; Behörde des US-Wirtschaftsministeriums) im Jahre 2007 durchgeführte Benutzerführungsstudie bestätigte, dass blinkende LEDs beim Fingerabdruckaufnahmeprozess nicht helfen und in einigen Fällen sogar den Benutzer irritieren und zu Verzögerungen des Aufnahmeprozesses führen (Theofanos et al., NISTIR 7403, 2007). Zusätzlich wurde analysiert, dass Videoanimationen, insbesondere für nicht geschulte Benutzer am besten für die Benutzerführung geeignet wären. Aus Sicherheitsgründen und wegen Platzbeschränkungen sind Monitore, die solche Videoinstruktionen zeigen könnten, an den Fingeraufnahmepunkten jedoch häufig nicht installierbar. Aber selbst wenn Instruktionsvideos gezeigt werden könnten, wäre der Benutzer gezwungen, sich auf den Fingerabdruckscanner, für das korrekte Auflegen der Finger, und gleichzeitig auf den Monitor, für die Videoanweisungen, zu konzentrieren. Solche Videoinstruktionen haben aber überwiegend keine direkte Kopplung mit dem tatsächlichen Aufnahmeprozess, sondern sind meist Endlosschleifen ohne Echtzeit-Rückkopplung für den Benutzer über Unzulänglichkeiten der Fingerabdruckaufnahme.

Heutige lokale Displays an Fingerabdruck- oder Handscannern helfen dabei, dem Benutzer eine Anleitung für den Fingeraufnahmeprozess zu erhalten, sie geben jedoch nur dem Operateur für die ordnungsgemäße Erfassung der gescannten Fingerabdrücke eine Rückmeldung und nicht der Person, deren Fingerabdrücke aufgenommen werden. Beispiele für Handscanner, die solche lokalen Displays aufweisen, sind z. B. L SCAN 500P (Hersteller: Cross Match Technologies), RealScan F (Suprema), MultiScan 1000 (Green Bit) oder LS 1100 (Secure Outcome).
Die Rückinformationen solcher lokaler Displays sind Live-Bilder der Fingerabdrücke, die in Echtzeit gezeigt werden, wenn die Fingerabdrücke aufgenommen wurden. Sie geben jedoch keine Anweisungen an den Benutzer, wie qualitativ unzureichende Fingerabdrücke zu verbessern wären. Außerdem hat ein ungeschulter Benutzer keinerlei Kenntnisse darüber, wie ein Finger für einen verwertbaren Fingerabdruck aufzulegen ist und wann ein angezeigter Abdruck gut oder perfekt ist. Das können nur erfahrene Fingerabdruckexperten beurteilen.
Die Live-Bilder von aufgenommenen Fingerabdrücken können zwar auch auf Bildschirmen von Computern angezeigt werden, die zur Steuerung mit dem Fingerabdruckscanner gekoppelt sind. Solche Bildschirme sind aber für die Person, deren Fingerabdrücke aufgenommen werden, meist nicht sichtbar oder falls doch, vermitteln sie ungeschulten Benutzern keine verständliche Rückmeldung über die Position und Qualität des Fingerabdrucks.

In den gegenwärtigen Fingerabdruckaufnahmeprozessen für Anwendungen, die nicht der Strafverfolgung dienen, d. h. wo in der Regel kein Beamter oder Bediener physisch die Fingerabdruckaufnahme durchführt oder anleitet, fehlen drei wesentliche Informationen, die es erlauben würden, Fingerabdrücke durch nicht geschulte Personen aufzunehmen:
a) das korrekte Positionieren der Finger,
b)die Notwendigkeit, die Finger während der Fingerabdruckaufnahme ruhig zu halten und
c)der richtige Druck, mit dem die Finger auf die Aufnahmefläche aufgepresst werden müssen.

### Positionierung:

Die richtige Position der Finger auf der Aufnahmefläche ist wichtig, um zu gewährleisten, dass alle Fingerabdrücke im endgültigen Fingerabdruckbild vollständig sichtbar sind. Es dürfen keine Fingerabdrücke abgeschnitten sein oder einander überlappen. In vielen Fällen sind die Finger (i) zu dicht zueinander positioniert, (ii) über die Ränder der Aufnahmefläche hinaus gespreizt oder (iii) nicht in der Mitte der Aufnahmefläche aufgelegt, sodass die Fingerabdrücke nicht vollständig aufgenommen werden.
Heutige Fingerabdruckscanner liefern für derartige Fehlpositionierungen der Finger keine Rückmeldung und software-generierte Überlagerungen des angezeigten Abdruckbildes mit Pfeilen sind schwer verständlich oder verlangen mehr als Mindestkenntnisse über den Fingerabdruckaufnahmeprozess. Ein solches Verständnis ist bei Personen, von denen in zivilen Anwendungen Fingerabdrücke aufgenommen werden sollen, nicht vorauszusetzen.

### Finger ruhig halten:

Obwohl die Zeit, die für die Aufnahme eines Fingerabdrucks über ein Gerät mit einem sogenannten Fingerabdruckscanner erforderlich ist, in den letzten Jahren durch schnellere Bildsensoren deutlich verringert wurde, dauert es immer noch 1 bis 3 Sekunden bevor ein Satz von vier Fingern aufgenommen ist. Während dieser Zeit dürfen sich die Finger nicht bewegen, sonst werden Details der Fingerabdrücke (Minutien) verfälscht. Derzeit sind jedoch an Fingerabdruckscannern keine Mittel vorgesehen, die den Benutzer auf diese Fehlerquelle ausreichend aufmerksam macht.

### Richtiger Anpressdruck der Finger:

Ausreichender Kontrast ist eine der wichtigsten Voraussetzungen für die Fähigkeit, Fingerabdrücke zu untersuchen, zu vergleichen und zu überprüfen. Der Kontrast in einem Fingerabdruck hängt sowohl von der Hautkonstitution (feucht/trocken, zart/beansprucht, jung/alt) als auch vom Druck ab, mit dem die Finger auf die Aufnahmefläche gepresst werden.
Sogar für ausgebildete Vollzugsbeamte ist eine Bildqualitätsbewertung eines mit einem sogenannten Livescanner (nach FBI- bzw. NIST-Standard) aufgenommenen und auf einem Computerbildschirm angezeigten Fingerabdruckbild durch visuelle Begutachtung schwierig. In den meisten Fällen wird deshalb in einem der Abdruckaufnahme nachgelagerten Schritt die Bildqualität durch Softwarealgorithmen analysiert. Ein Beispiel für einen solchen Algorithmus ist der vom National Institute of Standards and Technology (NIST) erarbeitete Algorithmus zur Beurteilung der Bildqualität NFIQ (NIST Fingerprint Image Quality). Dieser NFIQ Algorithmus beurteilt Fingerabdrücke anhand der Wahrscheinlichkeit, dass eine hinreichend gute Vergleichbarkeit mit weiteren Fingerabdrücken in automatischen Fingerabdruckvergleichssystemen (AFIS - Automatic Fingerprint Identifikationssystems) möglich ist. Dabei werden 5 Stufen unterschieden, wobei ein NFIQ Stufe 1 die schlechteste und Stufe 5 die beste Bildqualität darstellt. Für Bedienpersonal in zivilen Anwendungen und insbesondere für solche Personen, deren Fingerabdrücke aufgenommen werden sollen, ist eine visuelle Beurteilung eines Livescanner-Fingerabdrucks zur Bewertung der Bildqualität völlig unmöglich.

Für die so genannten "Livescanner" (oder auch engl. "live scan devices"), die in regierungsamtlichen Identitätsmanagementsystemen (Polizei, Visa, Personalausweis, Wählerregistrierung, usw.) zum Einsatz kommen und weitestgehend durch geschultes Personal bedient werden, bestehenden verschiedenste Anforderungen bezüglich der zu erfassenden Fingerarten (Zeigefinger, Mittel-, Ring-, kleiner Finger, Daumen), deren Anzahl (ein Finger allein, zwei Finger gemeinsam, vier Finger gemeinsam), deren Abdruckart (flach, gerollt), deren Erfassungsformat (z.B. 41 x 39 mm, 80 x 75 mm), deren Bildauflösung (500 ppi oder 1000 ppi) und der Qualitätsparameter dieser Bilder (SNR, Linearität, geometrische Verzerrung, Grauwertgleichförmigkeit, MTF) sehr hoch angesetzt sind und eine Konformität im Rahmen eines offiziellen Zulassungsverfahrens (USA: FBI, DE: BSI, Indien: STQC, Japan: NPA) ist nachzuweisen. Aber selbst für diese Systeme ist im Zuge der weiteren Kommerzialisierung für zivile Anwendungen (z.B. Reiseverkehr, Visa-Erstellung etc.) eine Anwendung der Erfindung wünschenswert und führt im Übrigen zur weiteren Objektivierung der Beurteilung, welcher Fingerabdruck als hinreichend gute Qualität zugelassen wird.
Grundsätzlich liegt eine ausreichend hohe Qualität von Fingerabdrücken dann vor, wenn in einer Datenbank mit mehreren Millionen Einträgen im automatischen Verfahren mit sehr hoher Wahrscheinlichkeit tatsächlich nur eine zutreffende Person ermittelt wird. Von dieser "Über-alles-Qualität" wurden durch Institutionen, wie das FBI und NIST, die technischen Parameter abgeleitet, die heute für hochwertige Fingerprint-Lesegeräte Zulassungsvoraussetzung sind.
Dennoch gilt das Zuordnen eines Fingerabdrucks zu tatsächlich nur einer Person aus einer angelegten Datenbank (auch mit weniger Einträgen und bei Verwendung von nicht zertifizierten Geräten) als Kriterium für die hinreichend hohe Qualität der Fingerabdruckaufnahme und Überprüfung, woraus sich im Umkehrschluss ergibt, dass die Fingerabdrücke so aufzunehmen sind, dass deren Minutien vollständig und möglichst unverfälscht erfasst werden, indem die obigen Parameter mindestens in einem Schnelltest geprüft werden.

Maßnahmen zur Verbesserung der Aufnahme von Fingerabdrücken für eine reproduzierbare Erfassung von qualitativ hochwertigen Abdruckbildern sind beispielsweise in den Patenten US 7319565 B2 und US 5416573 A beschrieben. Der einfachste Weg zur geeigneten Einstellung des Kontrastes vor und während des Aufnahmeprozesses ist die Variation des Anpressdruckes. Andererseits entstehen in den meisten Fällen Kontrastprobleme genau dadurch, dass Finger zu stark oder zu schwach angepresst werden. Zuviel Druck führt zu sehr dunklen Bildern und eine Separation der Erhöhungen und Vertiefungen der Haut ist im Fingerabdruck nicht mehr möglich. Zu wenig Druck führt dagegen zu niedrigem Bildkontrast und die Erhöhungen der Hautfalten sind nicht oder nur noch teilweise sichtbar.
Die Verwendung eines einfachen Drucksensors kann dieses Problem nicht zufriedenstellend lösen, weil - wie oben erwähnt - der Kontrast auch maßgeblich von der Hautkonstitution abhängt.

Der Erfindung liegt deshalb die Aufgabe zugrunde, eine neuartige Möglichkeit zur Aufnahme von Fingerabdrücken auf Basis von Fingerabdruckscannern in ausreichend hoher Qualität zu finden, bei der verständliche Rückinformationen vom Aufnahmeprozess in Echtzeit erfolgen, sodass der Benutzers eventuell notwendige Korrekturen vornehmen kann, ohne auf aktive Anleitung und Unterstützung eines geschulten Bedieners (Operateurs) angewiesen zu sein.

Erfindungsgemäß wird die Aufgabe bei einem Verfahren zur Aufnahme von Fingerabdrücken auf Basis von Fingerabdruckscannern in ausreichend hoher Qualität durch die folgenden Schritte gelöst:
- Aufnehmen von Fingerabdrücken von auf einer Aufnahmefläche aufgelegten Fingern,
- Analysieren von Anzahl und Lage der relevanten Objekte der Sensorabbildung,
- Vergleichen der Ist-Positionen und -Anzahl mit den Soll-Vorgaben für die Position, Anzahl und Art der Fingerabdrücke;
- Zugreifen auf einen Bildspeicher mit einer Bibliothek aus einer Vielzahl von animierten Bildern für unterschiedlichste Zustände von auf der Aufnahmefläche aufgelegten Fingern sowie für die Soll-Vorgaben, und
- Auswählen von Bildern oder Bildfolgen, die eine fehlerhafte Fingerauflage entsprechend der Objektanalyse als positive Fingerabbildung darstellen und
- Anzeigen der positiv konvertierten Fingerabbildung auf einer in unmittelbare Nähe der Aufnahmefläche positionierten Anzeigeeinheit in Form von zweidimensionalen Bildern.

Vorteilhaft werden zur Analyse der Anzahl und Lage der Fingerabdrücke als relevante Objekte der Sensorabbildung jeweils Abdrücke der ersten Fingerglieder als Dunkelpixelgebiete gesucht und mit umschreibenden Rechtecken, deren Lage mit Schwerpunkt, Fläche und Ausrichtung ermittelt wird, versehen, um den Vergleich mit den Soll-Vorgaben vorzunehmen.

Zweckmäßig wird die ermittelte Abweichung von der erwarteten Anzahl der Fingerabdrücke der Soll-Vorgaben zur Ergänzung einer entsprechenden Fingerdarstellung aus der Bibliothek des Bildspeichers ausgewählt. Dabei werden fehlende Finger vorzugsweise durch die Soll-Vorgaben ergänzt und mit abweichender Mustergestaltung zur Anzeige gebracht, wobei die abweichende Mustergestaltung zweckmäßig aus unterschiedlichen Begrenzungslinienarten, Schraffuren, Füllfarben oder Füllmustern ausgewählt wird.

In einer vorteilhaften Ausführung des Verfahrens werden fehlende Teile von Fingerabdrücken, die durch Randüberschreitung der Aufnahmefläche entstehen, in Kenntnis des übrigen Fingerverlaufs durch gegenläufig gerichtete Pfeile zur Anzeige gebracht und dadurch der Benutzer zur Lagekorrektur aufgefordert.
Des Weiteren können zusätzlich Abweichungen im Verhältnis von Länge zu Breite der als Objekt erkannten Fingerabdrücke gegenüber den Soll-Vorgaben ermittelt werden, wodurch Schräglagen der Finger erkannt und zur Anzeige gebracht werden.

In einer weiteren bevorzugten Ausführung des Verfahrens werden fehlende Teile von Fingerabdrücken, die durch Randüberschreitung der Aufnahmefläche entstehen, in einer weiteren bevorzugten Ausführung des Verfahrens in Kenntnis des übrigen Fingerverlaufs ergänzt werden und durch eine die Fingerkontur vergrößert nachbildende Fingerumrisslinie entsprechend der Soll-Vorgabe eine Korrekturanweisung zur Anzeige gebracht wird.

In einer weiteren Ausgestaltung des Verfahrens werden fehlende Größe oder fehlender Kontrast von Fingerabdrücken, die durch unzureichenden Druck auf der Aufnahmefläche entstehen, vorzugsweise durch Analyse von Grauwerthistogrammen, Standardabweichung und anschließende Schwellbewertung ermittelt.
Dabei können fehlende Größe oder fehlender Kontrast von Fingerabdrücken, die durch unzureichenden Druck auf der Aufnahmefläche entstehen, gegenüber den Soll-Vorgaben ermittelt und als vergrößerte Fingerumrisslinie angezeigt werden, wobei ein jeden Fingerabdruck umgebender gemusterter Bereich in Abhängigkeit vom aufgewendeten Druck als eine den Finger umgebende Fingerabdruckaura angezeigt wird, die bei Erreichen der Fingerumrisslinie den optimalen Anpressdruck auf der Aufnahmefläche signalisiert.

Eine falsche Ausrichtung von Fingerabdrücken, die durch schräge Auflage auf der Aufnahmefläche entsteht, wird zweckmäßig durch Analyse von Seitenverhältnissen eines umschreibenden Rechtecks sowie Abstände zum Rand der Aufnahmefläche ermittelt und durch rotierende Pfeile zur Ansicht gebracht.
In einer alternativen Ausführung wird eine falsche Ausrichtung von Fingerabdrücken, die durch schräge Auflage auf der Aufnahmefläche entsteht, durch Analyse von Seitenverhältnissen des umschreibenden Rechtecks sowie Abstände zum Rand der Aufnahmefläche ermittelt und durch eine die Fingerkontur vergrößert nachbildende Fingerumrisslinie entsprechend der Soll-Vorgabe eine Korrekturanweisung zur Anzeige gebracht.
In einer bevorzugten Ausführung des Verfahrens wird zusätzlich der Kontrast der Fingerglieder durch Analyse von Grauwerthistogrammen, Standardabweichung und anschließende Schwellbewertung. gegenüber den Soll-Vorgaben ermittelt und als vergrößerte Fingerumrisslinie angezeigt, wobei ein jeden Fingerabdruck umgebender gemusterter Bereich in Abhängigkeit vom aufgewendeten Druck als den Finger umgebende Fingerabdruckaura angezeigt wird, die in der Fingerumrisslinie den optimalen Anpressdruck auf der Aufnahmefläche signalisiert.
Bei der Kontrastermittlung der Fingerglieder kann das Ergebnis als analoge Druckanzeige in Form einer beidseitig symmetrischen linearen einheitslosen Skala auf der Anzeige dargestellt werden, wobei ein zu hoher Anpressdruck auf die Aufnahmefläche durch Pfeilbewegung entlang der Skala nach oben und ein zu niedriger Anpressdruck durch Pfeilbewegung nach unten signalisiert wird.

In einer weiteren vorteilhaften Ergänzung des Verfahrens wird zusätzlich die Ruhiglage der Finger durch Analyse von Abstandsverhältnissen von den Rändern der Aufnahmefläche über ein definiertes Zeitintervall überwacht, indem Schwerpunktlagen der ermittelten Fingerabdrücke, die nicht für mehr als drei Folgebilder konstant sind, als Doppelanzeigen der Finger zur Anzeige kommen.
In einer dazu alternativen Gestaltung der zusätzlichen Überwachung der Ruhiglage der Finger durch Analyse von Abstandsverhältnissen von den Rändern der Aufnahmefläche über ein definiertes Zeitintervall wird bei Schwerpunktlagen der ermittelten Fingerabdrücke, die nicht für mehr als drei Folgebilder konstant sind, eine Anzahl konzentrischer Kreisbögen neben der Handanzeige zur Anzeige gebracht werden.

Bei der Überwachung Ruhiglage der Finger werden vorzugsweise nur Änderungen der Schwerpunktlagen der ermittelten Fingerabdrücke, die sich innerhalb von 750ms um mehr als 15 Pixel verschieben, als Bewegung zur Anzeige gebracht.

Des Weiteren wird die Aufgabe der Erfindung bei einer Anordnung zur Aufnahme von Fingerabdrücken auf Basis von Fingerabdruckscannern in ausreichend hoher Qualität, in der eine Aufnahmeeinheit für hochaufgelöste Fingerabdrücke und eine nachgeordnete Bildverarbeitungseinheit zur Analyse von einfachen Qualitätskriterien vorgesehen sind, um nur qualitativ hochwertige Fingerabdrücke an eine Datenbank weiterzuleiten, dadurch gelöst, dass ein Bildspeicher mit einer Bibliothek aus einer Vielzahl von animierten Fingerpositionsbildern vorhanden ist und dass der Aufnahmeeinheit eine zweidimensionale Anzeigeeinheit zugeordnet ist, die zur Anzeige der animierten Fingerpositionsbilder aus dem Bildspeicher in Abhängigkeit von Ergebnissen der in der Bildverarbeitungseinheit analysierten Fingerabdrücke ausgebildet ist, wobei die Anzeigeeinheit zur Anzeige der animierten Fingerpositionsbilder durch positive Echtzeitdarstellungen der tatsächlich auf der Aufnahmefläche der Aufnahmeeinheit aufgelegten Finger zur einfachen Nutzerführung vorgesehen ist.

Die grundlegende Idee der Erfindung besteht darin, dass die Informationen über die aufgelegten Finger so von der Bildverarbeitungseinheit verarbeitet werden, dass eine schnelle und allgemeinverständliche Rückmeldung über die aufgelegten Finger und Korrektur von Auflagefehlern erfolgen kann. So werden in bevorzugter Weise keine Fingerabdrücke angezeigt, da diese dem nicht-erfahrenen Benutzer keine Beurteilung über die Qualität des Fingerabdruckes erlauben, sondern eine Kurzanalyse läuft direkt im Fingerabdruckscanner ab und wird aus einer in einem Bildspeicher gespeicherten Bibliothek von Bildern typischer Auflagefehlersituationen animiert, bevorzugt als Videosequenz zur Anzeige gebracht.

Die Erfindung ermöglicht die Aufnahme von Fingerabdrücken, deren Beurteilung nach Lage, Anzahl, Bewegung und Kontrast der Fingerabdrücke. Die Umsetzung dieser Bewertung in Informationen, die für nicht geschulte Benutzer verständliche Rückmeldungen über den Status des Fingerabdruckaufnahmeprozesses und Aufforderungen zu eventuellen Korrekturen beinhaltet, wird über eine Anzeigeeinheit (Display) eine visuelle Bilddarstellung bereitgestellt.

Die Erfindung soll nachstehend anhand von Ausführungsbeispielen näher erläutert werden. Die Zeichnungen zeigen:
- Fig. 1: den prinzipiellen Ablauf des erfindungsgemäßen Verfahrens mit einer Interaktion zwischen Aufnahmeeinheit, Bildverarbeitungseinheit, Bildspeicher und Anzeigeeinheit sowie einer Datenbank;
- Fig. 2: ein Beispiel für die Interaktion zwischen Aufnahmeeinheit, Bildverarbeitungseinheit, Bildspeicher und Anzeigeeinheit;
- Fig. 3: ein Prinzip zur Ermittlung der Anzahl von auf der Aufnahmeeinheit aufgelegten Fingern und mögliche grafische Benutzeranweisungen zum Auflegen der gewünschten Fingerzahl;
- Fig. 4: ein Prinzip zur Erkennung von über die Begrenzung der Aufnahmeeinheit hinaus gespreizten Fingern und mögliche grafische Benutzeranweisungen zum Ausrichten der Finger in eine gewünschte Auflageposition;
- Fig. 5: ein Prinzip zur Erkennung von über die Begrenzung der Aufnahmeeinheit hinaus verschobenen Fingern und mögliche grafische Benutzeranweisungen zum Verschieben der Finger in eine gewünschte Auflageposition;
- Fig. 6: ein Prinzip zur Erkennung von verdreht auf der Aufnahmeeinheit aufgelegten Fingern und mögliche grafische Benutzeranweisungen zum Eindrehen der Finger in eine gewünschte Auflageposition;
- Fig. 7: ein Prinzip zur Erkennung einer Auflageposition beider Daumen auf der Aufnahmeeinheit und mögliche grafische Benutzeranweisungen zum Erreichen einer gewünschten Auflageposition;
- Fig. 8: ein Prinzip zur Erkennung eines optimalen Auflagedrucks von auf der Aufnahmeeinheit aufgelegten Fingern und mögliche grafische Benutzeranweisungen zum Einstellen des optimalen Auflagedrucks;
- Fig. 9: ein Prinzip zur Erkennung von unruhig auf der Aufnahmeeinheit aufgelegten Fingern und mögliche grafische Benutzeranweisungen zum ruhigen Ablegen der Finger;
- Fig. 10: ein Prinzip zur Erkennung einer falsch auf der Aufnahmeeinheit aufgelegten linken Hand und mögliche grafische Benutzeranweisungen zum Wechsel der Hand.

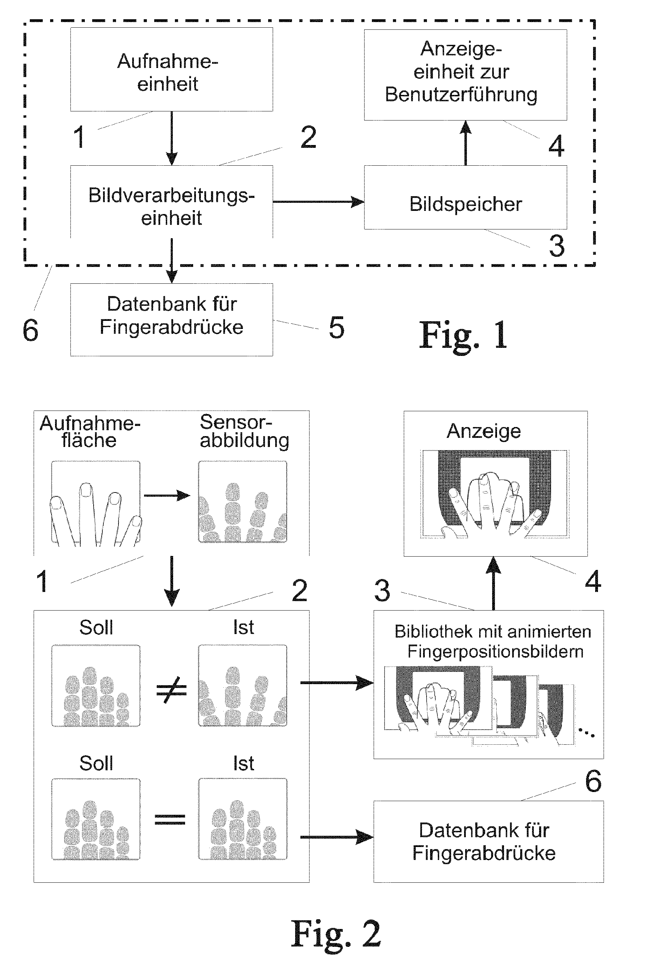

Die Vorrichtung besteht gemäß Figur 1 aus folgenden Komponenten: einer Aufnahmeeinheit 1, einer Bildverarbeitungseinheit 2, einem Bildspeicher 3 sowie einer Anzeigeeinheit 4.
Es versteht sich, dass in Abhängigkeit der Technologie zur Aufnahme der Fingerabdrücke 13 die Ausgestaltung der Aufnahmeeinheit 1 unterschiedlich gestaltet sein kann und die hierin beschriebene Erfindung keine Einschränkung der Aufnahmetechnologie darstellt. Die Bildverarbeitungseinheit 2 kann entweder in die Aufnahmeeinheit 1 integriert oder in einer separaten Einheit untergebracht sein. Die Anzeigeeinheit 4 ist bevorzugt direkt mit der Aufnahmeeinheit 1 verbunden, um eine möglichst ortsnahe Verbindung zwischen Aufnahme und Rückmeldung zu ermöglichen. Die Anzeige kann jedoch auch getrennt von der Aufnahmeeinheit 1 erfolgen. Bevorzugt sind alle vorgenannten Komponenten in einem Fingerabdruckscanner 5 integriert.
Obwohl das erfindungsgemäße Verfahren im Wesentlichen auf die Kurzanalyse der aufgenommenen Fingerabdrücke 13 und deren Ergebnisrückkopplung auf einen nicht geschulten Benutzer gerichtet ist, um den Fingerabdruckaufnahmeprozess qualitativ zu verbessern und zeitlich zu straffen, ist der wesentliche Zweck natürlich die Einpflegung von qualitativ hochwertigen Fingerabdrücken 13 in eine zentrale Datenbank 6. Dieser Umstand ist in Fig. 1 und Fig. 2 durch die Verbindung zu einer vorzugsweise externen Datenbank 6 prinzipiell dargestellt, ohne dass die dafür erforderlichen weiterführenden Verarbeitungsschritte hier eine genauere Erwähnung finden und im Übrigen bekannt sind.

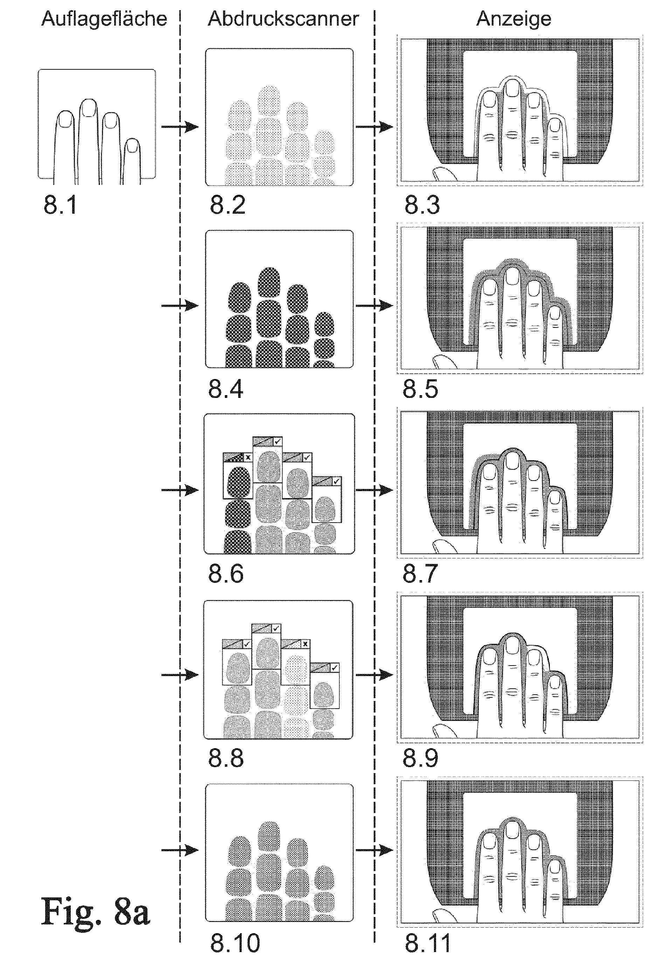

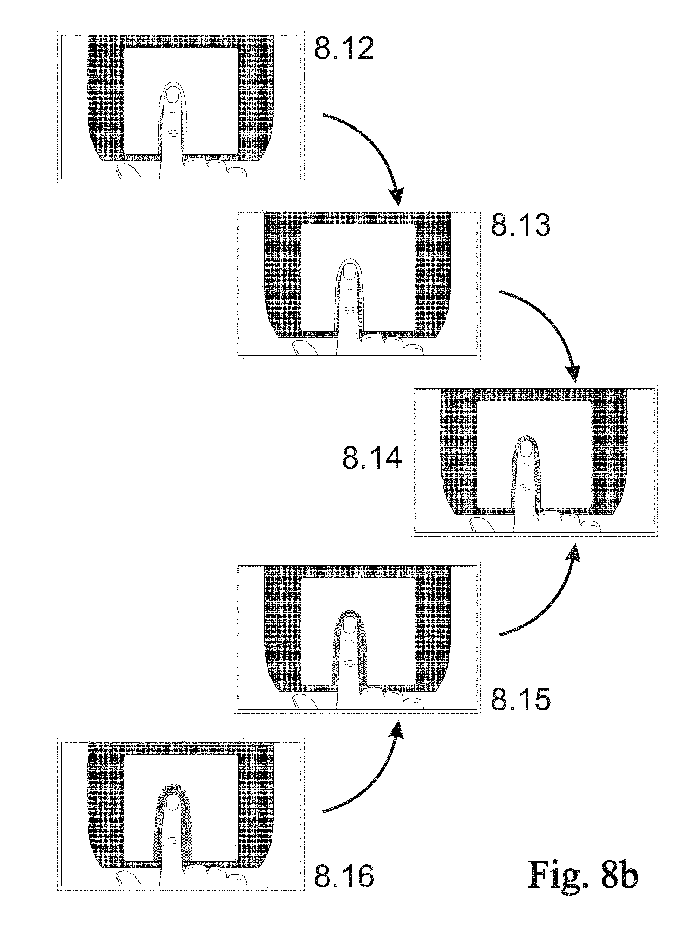

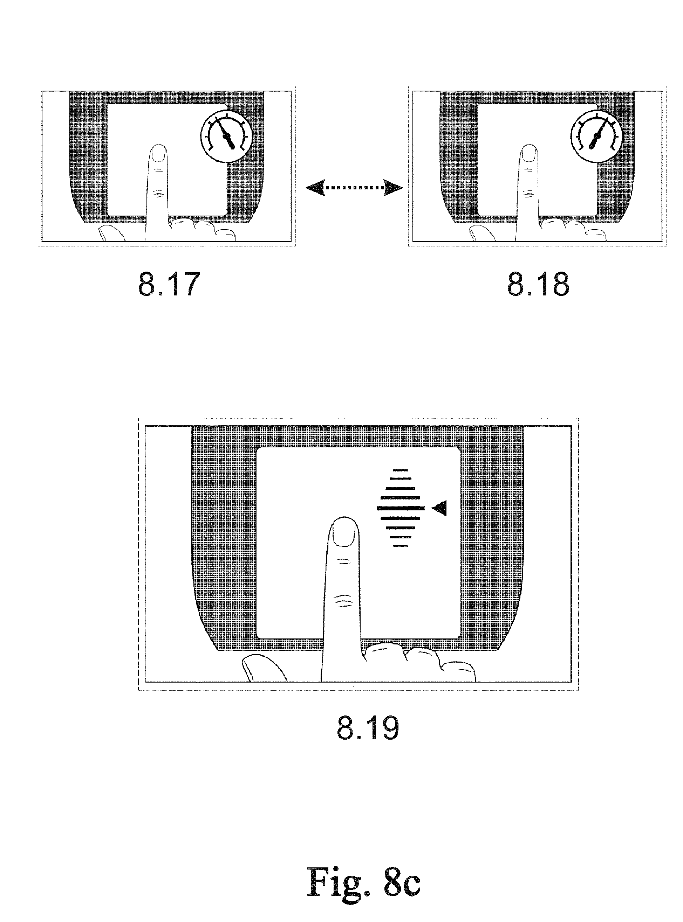

Die Darstellungen der Rückmeldungen über den Fingerabdruckaufnahmeprozess können sowohl statisch als auch dynamisch erfolgen. In den dynamischen Darstellungen können beliebig viele Schritte für die Darstellungen eines Parameters angewendet werden. So kann beispielsweise die Darstellung des auszuübenden Drucks der Finger 12 bis zum Erreichen des optimalen Drucks (siehe Figur 8) graduell in zehn Schritten oder auch nur in zwei Schritten erfolgen.

Im Folgenden wird der prinzipielle Weg der Aufnahme von vier Fingern 12 mittels der erfindungsgemäßen Methode/Vorrichtung beschrieben.

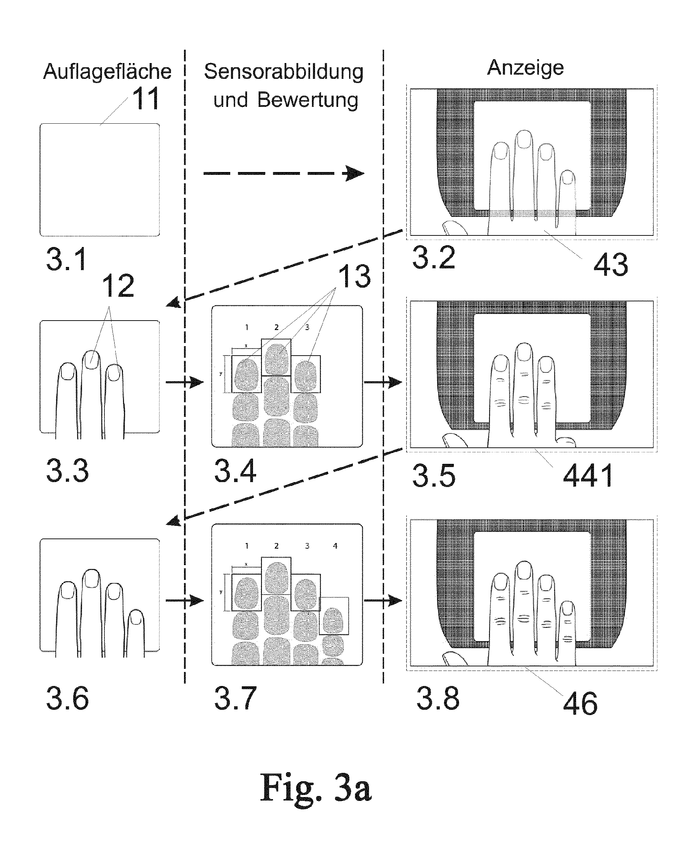

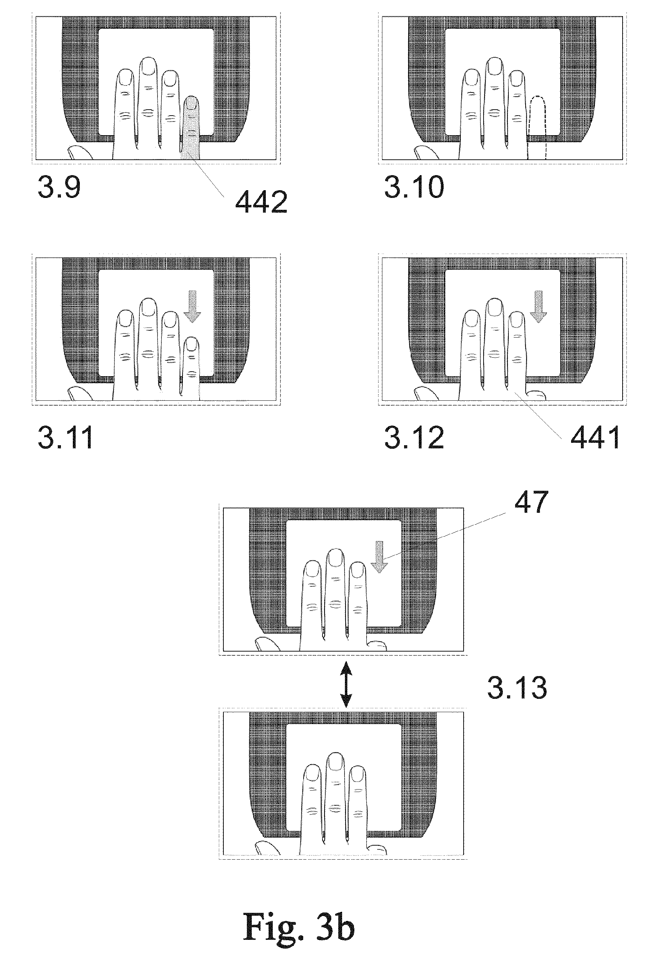

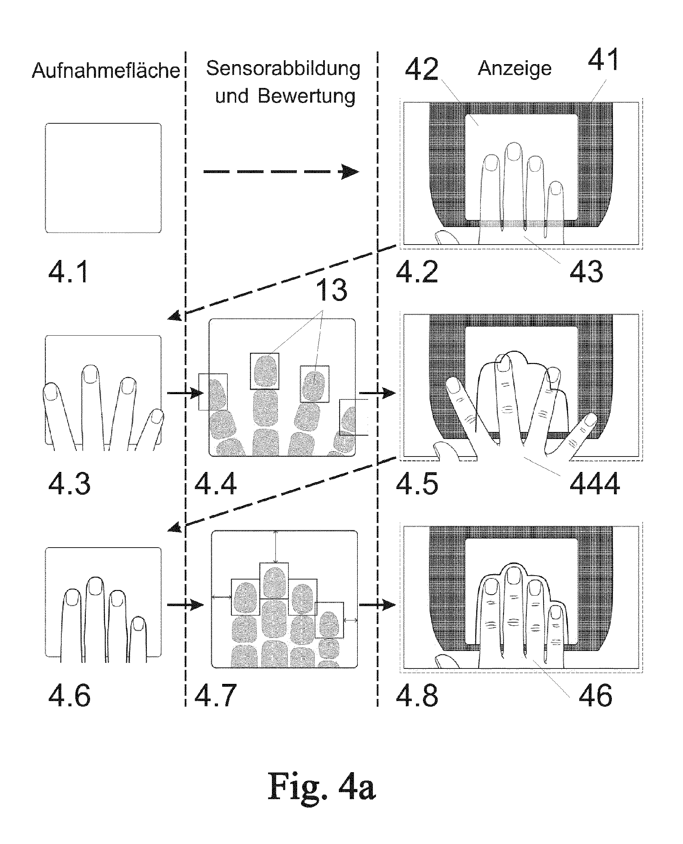

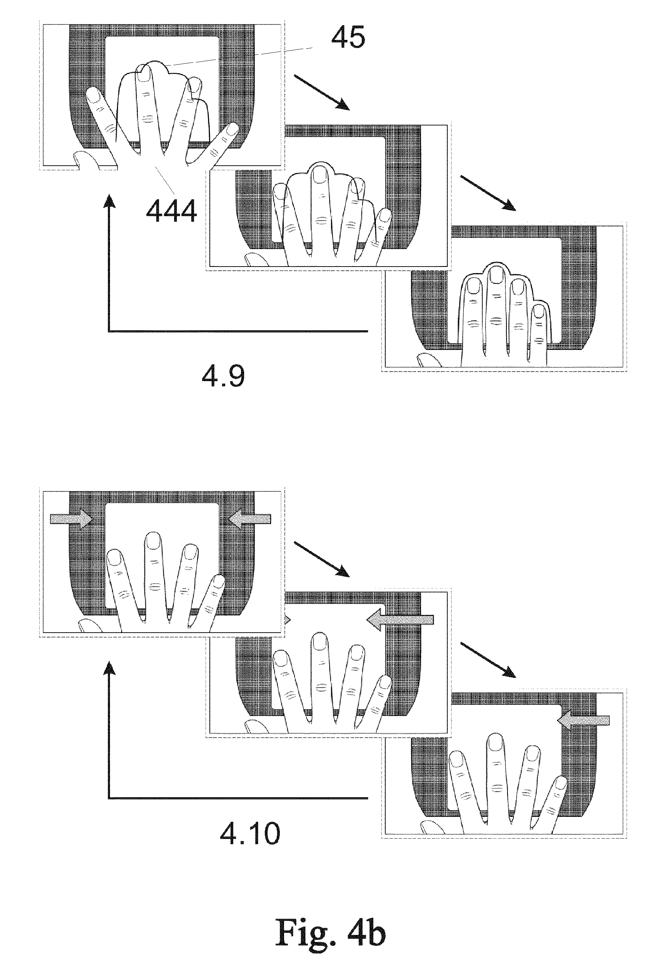

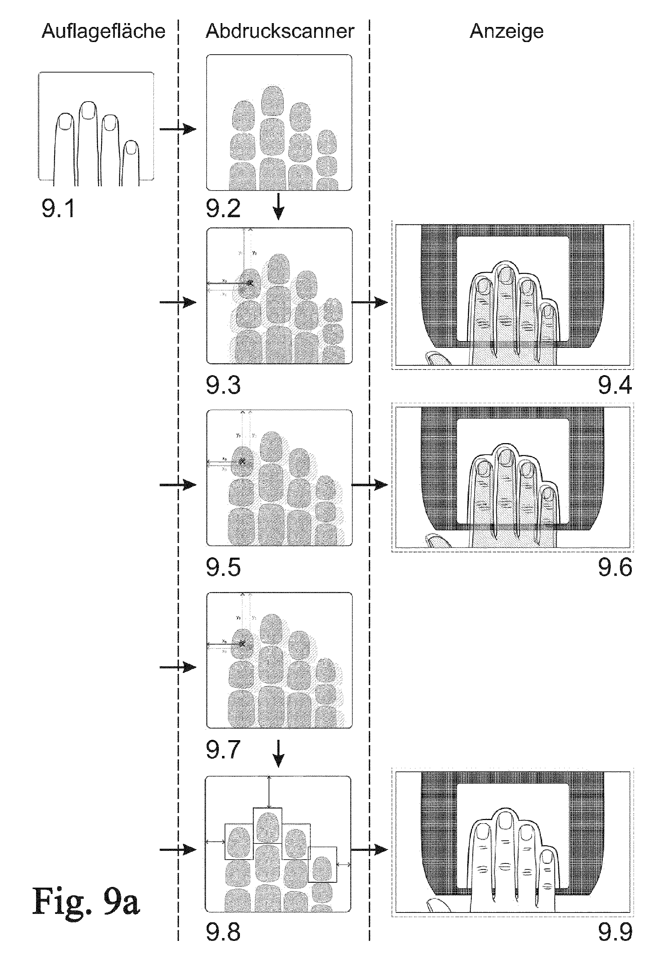

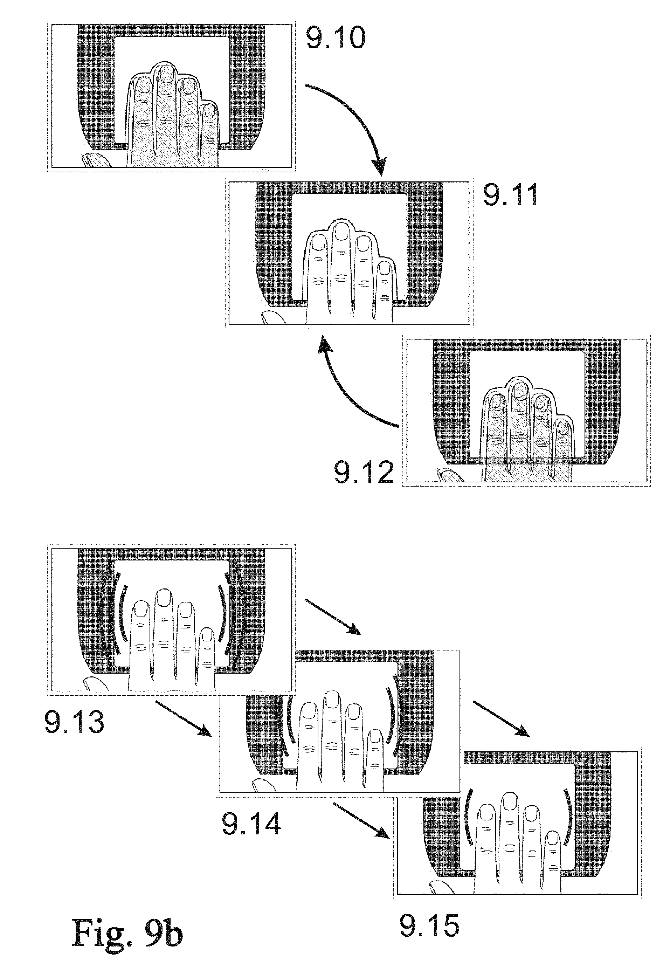

In Fig. 3 wird er Benutzer über die Anzeigeeinheit 4 aufgefordert, die vier Finger 12 der rechten Hand auf die Aufnahmefläche 11 zu platzieren. Der Benutzer legt seine vier Finger 12 auf, was durch eine Rückmeldung auf der Anzeigeeinheit 4 bestätigt wird. Die Bildverarbeitungseinheit 2 prüft den Parameter "Anzahl der geforderten Finger". Bei Übereinstimmung von aufgelegter Fingeranzahl zu geforderter Fingeranzahl wird die Beurteilung fortgesetzt. Bei Nichtübereinstimmung wird der fehlende Finger 12 dem Benutzer über die Anzeigeeinheit 4 angezeigt.
In den nächsten Schritten wird durch die Bildverarbeitungseinheit 2 geprüft, ob die Position der Finger 12 korrekt ist (Fig. 4, 5 und 6). Im Falle, dass dem nicht so ist, wird dem Benutzer die falsche Position angezeigt. Sollte die Position der aufgelegten Finger 12 korrekt sein, so wird weiterhin die ruhige Lage der Finger 12 auf der Aufnahmeeinheit 1 von der Bildverarbeitungseinheit 2 geprüft (Fig. 9). Sollten sich die Finger 12 bewegen, so wird das dem Benutzer durch die Anzeigeeinheit 4 angezeigt. Im nächsten Schritt wird der Kontrast der aufgelegten Finger 12 von der Bildverarbeitungseinheit 2 geprüft (Fig. 8). Sollte ein ausreichender Kontrast und somit eine akzeptable Qualität des Fingerabdrucks 13 gegeben sein, dann werden die Fingerabdrücke 13 von der Aufnahmeeinheit 1 aufgenommen, dem Benutzer der erfolgreiche Abschluss der Aufnahme angezeigt und einer Datenbank 6 zur zentralen Speicherung zugeführt. Alternativ können die Fingerabdrücke 13 einem Vergleich mit in der Datenbank 6 bereits gespeicherten Fingerabdrücken verglichen werden.
Sollte der Kontrast der aufgelegten Finger 12 zu niedrig sein, so wir dem Benutzer angezeigt, dass mehr Druck auf die aufgelegten Finger 12 auszuüben ist, um einen hinreichenden Kontrast zu erzielen. Sollte der Kontrast der aufgelegten Finger 12 zu hoch sein, dann wird dem Benutzer über die Anzeigeeinheit 4 signalisiert, den Druck der Finger 12 auf die Aufnahmefläche 11 zu reduzieren.
Über die Aufnahmeeinheit 1 werden die Fingerabdrücke 13 erfasst, sobald diese die Aufnahmefläche 11 berühren. Die Aufnahmeeinheit 1 besteht beispielweise aus einem optischen System, bestehend aus der Aufnahmefläche 11, einer Kamera mit einem Objektiv (nicht dargestellt und einem Bildsensor (nur Ausgabebild dargestellt). Über die Bildverarbeitungseinheit 2 erfolgt die Beurteilung der Fingerabdrücke 13 hinsichtlich Position, Anzahl, Kontrast und Bewegung. Das Ergebnis dieser Beurteilung wird in Echtzeit über die Anzeigeeinheit 4 dem Benutzer in verständlicher Art mitgeteilt. Bevorzugt erfolgt die Rückmeldung über grafische Elemente. Damit wird eine, unabhängig von Sprache und Bildung, allgemeinverständliche Rückmeldung über die erfolgreiche oder nichterfolgreiche Handlung gewährleistet. Im Bildspeicher 3 sind vordefinierte Bilder (Templates typischer Auflagefehler der Finger 12) abgespeichert, die je nach Rückmeldung aus der Bildverarbeitungseinheit 2 auf der Anzeigeeinheit 4 zur Anzeige gebracht werden. Dabei kann der Bildspeicher 3 sowohl in den Fingerabdruckscanner 5, wie in Fig. 1 dargestellt, als auch in einem verbundenen externen Rechner integriert sein. Aus Zweckmäßigkeitsgründen für die Beschreibung wird - ohne Beschränkung der Allgemeinheit - angenommen, dass der Bildspeicher 3 im Fingerabdruckscanner 5 integriert ist. Diese abgespeicherten Bilder enthalten alle möglichen Zustände der Erfüllung oder Nichterfüllung der gewünschten Zielgröße. Beispielsweise sind dort Bilder über die korrekte Anzahl, den korrekt ausgeübten Druck oder die korrekte Position der Finger 12 abgelegt. Ebenso sind im Bildspeicher 3 beispielsweise Bilder über den mangelnden Druck, die fehlerhafte Position oder fehlende Finger 12 abgelegt. Es versteht sich im Sinne dieser Erfindung, dass die Zahl und Ausführung der Bilder nicht auf die beschriebenen Fälle reduziert ist und dass sowohl Einzelfinger, mehrerer Finger 12 in einem Bild sowie Bildern von gerollten und flachen Fingern abgespeichert werden können. Es versteht sich auch im Sinne dieser Erfindung, dass ein Mehrfingerbild dynamisch aus Einzelfingerabbildungen erzeugt werden kann.

Figur 1 zeigt die prinzipielle Interaktion zwischen den Komponenten der Vorrichtung. Die Finger 12 werden auf der Aufnahmefläche 11 der Aufnahmeeinheit 1 platziert. Die aufgelegten Objekte werden vom Sensor der Aufnahmeeinheit 1 erfasst und diese Information an die Bildverarbeitungseinheit 2 weitergegeben. Die Bildverarbeitungseinheit 2 analysiert die erhaltenen Informationen, vergleicht vorher festgelegte Parameter (z. B. Grauwerte, Größe, Lage) mit den aktuell durch die aufgelegten Finger 12 erzeugten Parameter. Das Ergebnis der Analyse kann entweder eine Übereinstimmung zwischen der geforderten Zielgröße der festgelegten mit den aktuellen Parametern oder ein Abweichen davon sein. Je nach Ergebnis, Erfüllung oder Abweichung, wird durch die Bildverarbeitungseinheit 2 das entsprechende Bild aus dem Bildspeicher 3 über Erfüllung oder Abweichung vom Zielzustand über die Anzeigeeinheit 4 zur Anzeige gebracht. Fig. 2 zeigt diesen Ablauf beispielhaft für den Fall, dass die zu platzierenden Finger 12 in nicht-korrekter Position aufgelegt werden. Es wird angenommen, dass die vier Finger 12 der rechten Hand aufgenommen werden sollen. Die vier Finger 12 befinden sich auf der Aufnahmeeinheit 1. Zwei der vier Finger 12 sind jedoch über die Begrenzung der Aufnahmefläche 11 platziert. Die Sensorabtastung erfasst somit zwei korrekt und zwei falsch platzierte Finger 12. Diese Information wird von der Bildverarbeitungseinheit 2 ausgewertet und da hier ein Nichterfüllen vom Zielzustand vorliegt, wird das entsprechende Bild über die über die Aufnahmefläche 11 hinausragenden Finger 12 zur Anzeige gebracht.

### Ausführungsbeispiele:

### 1. Parameter: Anzahl der geforderten Finger

In Fig. 3a ist gezeigt, wie der Benutzer, auf Basis einer Erfassung der auf der Aufnahmefläche 11 (linke Spalte der Teilbilder 3.1, 3.3, 3.6) aufgelegten Finger 12 und einer Analyse der Sensorabbilder (mittlere Spalte der Teilbilder 3.4, 3.7) des Fingerabdruckscanners 5, über die Anzeigeeinheit 4 durch eine geeignete Darstellung einer (stilisierten, computergezeichneten oder auch fotografieähnlichen) Hand aufgefordert wird, die vier Finger 12 der rechten Hand aufzulegen (Bild 3.2). Die Anzeige der Aufforderung zum Auflegen der vier Finger 12 erfolgt durch Darstellung von vier halbtransparenten Fingern (Handphantom 43, hier der rechten Hand) auf der Anzeigeeinheit 4. Zu diesem Zeitpunkt befinden sich noch keine Finger 12 auf der Aufnahmefläche 11 der Aufnahmeeinheit 1 (Bild 3.1).

Es wird angenommen, dass der Benutzer nicht alle Finger 12 aufgelegt hat. In Bild 3.3 sind nur drei statt der geforderten vier Finger 12 auflegt. Die drei Finger 12 werden als Objekte von der Bildverarbeitungseinheit 2 durch Analyse der Grauwerte und Größe der aufgelegten Objekte erkannt (wie beispielsweise beschrieben in US 7277562 B2). Dabei wird für jedes Bild, das der Sensor liefert, automatisch vor der Segmentierung der einzelnen Fingerabdrücke 13 ein Kontrast ermittelt, für den einfach die Standardabweichung vom gesamten Bild der Sensorabtastung bestimmt und mit einem Schwellwert ( z. B. 10) verglichen wird. Wurde der Schwellwert überschritten 22, wird mit der Segmentierung von Fingerabdrücken 13 begonnen, die zur Bestimmung der Anzahl der aufliegenden Finger 12 erforderlich ist. Dazu werden die in Pixelgruppen (Wolken) zusammenliegenden Dunkelpixel zusammengefasst und mit einem umschreibenden Rechteck 14 versehen, das jeweils mindestens ein Randpixel der Wolke schneidet oder berührt.
Bild 3.4 zeigt die von der Sensorabtastung der Aufnahmeeinheit 1 erfassten drei Fingerabdrücke 13 mit stilisiert dargestellten Analyseschritten, die in der Bildverarbeitungseinheit 2 ausgeführt werden. Hierbei muss jeder Finger 12 als Objekt (das als oberstes Fingerglied definiert ist und als solches im digitalen Bild gesucht wird) einen Mindestwert an Grauwerten und/oder eine Mindestfläche (2D-Größe) erreichen. Hierzu wird ein umschreibendes Rechteck 14 (engl. boundingbox) um das Objekt bestimmt, die durch die am weitesten außen liegen Pixel parallel zu den Seitenkanten der Aufnahmefläche 11 aufgespannt wird. Zusätzlich wird die Orientierung des Objektes bestimmt, indem eine Trägheitshauptachse (durch die Objektpixelwolke) berechnet wird, entlang der die Objektausdehnung in senkrechter Richtung der Sensorabbildung als Anzahl der Pixel bestimmt und als Länge berechnet wird. Falls die Trägheitsachse eine Neigung aufweist, die kleiner als eine Toleranz ist (z.B. 3°) die Y-Dimension ermittelt. Andernfalls muss das Objekt (Pixelwolke) zu den Seitenkanten der Aufnahmefläche 11 auf Parallelität "zurückgedreht" berechnet und das umschreibende Rechteck 14 modifiziert werden, um die wahre Y-Dimension zu ermitteln. Analoge Schritte sind dann auch für die orthogonale X-Dimension auszuführen, um die daraus die X-Dimension zu berechnen und die Größe der so ermittelten Objektdimension mit einem Längen-/Breiten-Schwellwert für einen Minimalabdruck (von z. B. 15 mm/8 mm) zu vergleichen. Werden Längen und Breiten-Schwellwert überschritten, wird der Fingerabdruck 13 als solcher akzeptiert und mit "good shape" deklariert, andernfalls als "bad shape" verworfen.

Bei jedem aufgelegten Finger 12 wird der tatsächlich gemessene Grauwert und/oder die Fläche mit vordefinierten Grauwerten/Flächen verglichen. Ein Erreichen oder Überschreiten dieses Mindestmaßes führt dazu, dass der Finger 12 als solcher erkannt und gezählt (Anzahl) wird und die bisher auf der Anzeigeeinheit 4 transparent dargestellten Finger 12 farbig dargestellt werden.
Bei dem nicht aufgelegten Finger 12 wird eine vorab definierte Mindestanzahl an Grauwerten und/oder eine vorher definierte Flächengröße nicht erreicht. Die Information über die unzureichenden Grauwerte und/oder die unzureichende Fläche eines erwarteten Objekts wird als Information über einen fehlenden Finger 12 von der Bildverarbeitungseinheit 2 an die Anzeigeeinheit 4 weitergegeben. Die Anzeigeeinheit 4, die eine stilisierte Geräteoberfläche 41 und eine stilisierte Aufnahmefläche 42 auf einem Display zur Anzeige bringt, interpretiert diese Information und stellt den fehlenden Finger 12 in einer ersten Darstellung als Hand mit fehlendem Finger 441 dar (Bild 3.5).

In der Fig. 3b zeigen die Bilder 3.9 bis 3.13 alternative Darstellungen des fehlenden vierten Fingers 12. Hierbei wird der fehlende Finger 12 auf der Anzeigeeinheit 4 in einer anderen Farbe als Hand mit andersfarbigem Finger 442 oder als Hand mit gestricheltem Finger 443 dargestellt. Dabei zeigt Bild 3.9 den fehlenden vierten Finger 12 bei der Hand mit andersfarbigem Finger 442 lediglich ausgegraut (grau gefüllt) und in Bild 3.10 ist der fehlende vierte Finger 12 nur als Umriss (Hand mit gestricheltem Finger 443) dargestellt.
Die Bilder 3.11 und 3.12 von Fig. 3b zeigen alternative Darstellungen zur Aufforderung des Benutzers, den fehlenden vierten Finger 12 aufzulegen, indem durch einen Pfeil 47 auf den fehlenden oder den (gleich- oder andersfarbig neben den übrigen Fingern 12) dargestellten Finger 12 hingewiesen wird.
In einer weiteren Gestaltung gemäß Bild 3.13 kann der fehlende Finger 12 auch alternierend (dargestellt und nicht dargestellt) angezeigt werden. In anderen Modifikationen kann der fehlende Finger 12 auch blinkend als gestrichelt umrandet oder andersfarbig gegenüber den vorhandenen Fingern 12 dargestellt werden oder der Pfeil 47 in den Bildern 3.11 oder 3.12 als blinkender (alternierend angezeigter) Pfeil 47 zur Verstärkung der Aufforderung auf der Anzeigeeinheit 4 eingeblendet werden.

Die Bilder für die Erfüllung oder Nichterfüllung eines gewünschten Parameters (in vorstehend beschriebenen Beispielen: die korrekte Anzahl der aufgelegten Finger 12) sind für alle Auflagesituationen von Fingern 12 vordefiniert und im Bildspeicher 3 abgelegt. Dabei ist für jede Auflagesituation mindestens ein gesondertes Bild (korrekte Fingerauflage) gespeichert. Ferner sind Bilder für alle denkbaren Fehlpositionierungen von Fingern 12 beider Hände und, falls die Darstellung eines Bewegungsvideos zwischen Falsch- zu Richtigauflage gewünscht ist, noch zusätzliche Zwischenbilder zur Darstellung einer Videoanimation zur Fingerauflagekorrektur gespeichert.
Sobald der Benutzer den fehlenden vierten Finger 12 auf die Aufnahmefläche 11 der Aufnahmeeinheit 1 legt (Fig. 3a, Bild 3.6) und dieser von der Sensorabtastung an Position Nr. 4 zusätzlich zu den bisher schon detektierten drei Fingern 12 erfasst wird (Bild 3.7), werden die Grauwerte und/oder Objektgrößen mit den Mindestschwellwerten erneut für alle vier Finger 12 verglichen und bei Erreichen oder Überschreiten dieser Schwellwerte wird der vierte Finger 12 ebenfalls als (gleichfarbiger) Finger auf der stilisierten Aufnahmefläche 42 dargestellt (Bild 3.8). Sobald alle vier Finger farbig als vorhanden dargestellt werden, wird der Parameter "Geforderte Anzahl an Fingern" als erfüllt angesehen und von der Bildverarbeitungseinheit 2 wird aus dem Bildspeicher 3 das Bild für die korrekte Anzahl der aufgelegten Finger 12 an die Anzeigeeinheit 4 weitergegeben. Ebenfalls kann zusätzlich durch eine textbasierte Information auf den fehlenden Finger 12 hingewiesen werden.

### 2. Parameter: Korrekte Position der Finger

Die Bildverarbeitungseinheit 2 analysiert von aufgelegten Fingern 12 lediglich definierte Objekte (erste Fingerglieder) entsprechend ihrer Position zum Rand der Aufnahmefläche 11. Hierzu werden die Grauwerte und Flächengröße der detektierten Objekte bestimmt. Es wird davon ausgegangen, dass alle Objekte durch Analyse der Grauwerte und Größe der Aufnahmefläche 11 gefunden werden. Sollten sich die so gefundenen Objekte nicht in einem vordefinierten Mindestabstand zum horizontalen und vertikalen Rand der Aufnahmefläche 11 befinden oder sogar über diesen hinausragen, wird diese Information von der Bildverarbeitungseinheit 2 analog zu der bereits im ersten Beispiel beschriebenen Weise (Zuordnung der im Bildspeicher 3 abgelegten Bilder für die erkannte Auflagesituation) über die Anzeigeeinheit 4 an den Benutzer weitergegeben.

In Fig. 4a hat der Benutzer die vier Finger 12 in einer nicht korrekten Position auf die Aufnahmefläche 11 gelegt (Bild 4.3). Hierbei hat der Benutzer die Finger 12 zu weit gespreizt und zwei der vier Finger 12 ragen über den Rand der Aufnahmefläche 11 hinaus, was dazu führt, dass zwei der vier in der Sensorabtastung (mittlere Spalte von Fig. 4a) erwarteten Fingerabdrücke 13 als mit nicht hinreichendem Mindestmaß ihrer Größe (Abdruckfläche des ersten Fingergliedes) erfasst werden (Bild 4.4). Daraus wird ein Anzeigebild in Form einer Hand mit gespreizten Fingern 444 gemäß Bild 4.5 generiert, das den Benutzer auffordert, die Position entsprechend zu korrigieren. Dazu wird gemäß Bild 4.5 auf der Anzeigeeinheit 4 die gewünschte korrekte Position der Finger 12 durch eine Umrissabbildung (durchsichtiges Handphantom 43) dargestellt und der tatsächlichen inkorrekten Position der Fingerdarstellung (Handnachbildung 44) überlagert, die, den in der Bildverarbeitungseinheit 2 ermittelten Fingerabdrücken 13 zugeordnet, aus dem Bildspeicher 3 (z. B. als vollwertiges farbiges Fingerabbild) ausgewählt wird. Die Darstellung der Überlagerung der falsch und korrekt aufgelegten Finger 12 kann dabei alternativ mittels unterschiedlicher Farben (z. B. auch Falschfarbendarstellung) oder durch Transparenz- und Farbdarstellung erfolgen.
In einer Ausführung gemäß Fig. 4b wird der Benutzer durch wiederholte Bildsequenzen (Bild 4.9 oder 4.10) animiert, seine Finger 12 entsprechend weniger zu spreizen, so dass der Minimalabstand zum vertikalen Rand erreicht wird. Dabei kann die Anzahl der die Sequenz bildenden Einzelbilder beliebig groß sein. Sie ist in den Beispielen gemäß Fig. 4b mit drei Bildern gewählt, kann in einer (nicht dargestellten) Minimalvariante jedoch auch lediglich zwei Bilder (Anfang und Ende bzw. falsche und richtige Position) von Handnachbildungen 44 umfassen.

Sobald der Benutzer die Position der vier Finger 12 korrigiert hat (Bild 4.6), werden von der Bildverarbeitungseinheit 2 erneut die Grauwerte und Größe der aufgelegten Fingerabdrücke 13 analysiert, deren Abstand zum Rand der Aufnahmefläche 11 bestimmt (Bild 4.7) und die korrekte Positionierung der Finger 12 über die Darstellung auf der Anzeigeeinheit 4 bestätigt (Bild 4.8). Die korrekte Positionierung der Finger 12 kann durch exakte Überlagerung der gewünschten Position mit der erfolgten Position dargestellt werden, eine Farbänderung bei Erreichen der korrekten Position oder durch zusätzliche grafische Elemente (einen grünen Punkt oder ein Häkchen) oder textliche Elemente ( z. B. "OK") dargestellt werden. Es versteht sich von selbst, dass die in Fig. 4a, Bild 4.5 oder in Fig. 4b, Bild 4.9 dargestellte Rückmeldung zur Positionskorrektur auch ohne Überlagerung, also nur durch Darstellung einer Bildsequenz mit sich schließenden Fingern eine äquivalente Form der Auswertung und Anzeige gemäß der Erfindung darstellt.

Eine weitere alternative Aufforderung zur Korrektur der Positionierung der Finger 12 stellt Bild 4.10 dar. Hierbei wird der Benutzer neben der dargestellten Hand mit gespreizten Fingern 444 durch zwei horizontale Pfeile 47 aufgefordert, seine Finger 12 zu schließen, sodass ein Mindestabstand zum Rand der Aufnahmefläche 11 erreicht wird. Es versteht sich als zu dieser Erfindung gehörig, dass beide Pfeile 47 gleichzeitig, wechselseitig oder blinkend dargestellt werden können. Außerdem kann die Darstellung der Pfeile 47 so erfolgen, dass sich bei zunehmend korrektem Mindestabstand zum Rand der Aufnahmefläche 11 die Länge der Pfeile 47 verkürzt und so eine intuitive Rückmeldung über die korrekte Maßnahme zur Fingerpositionierung erfolgt.

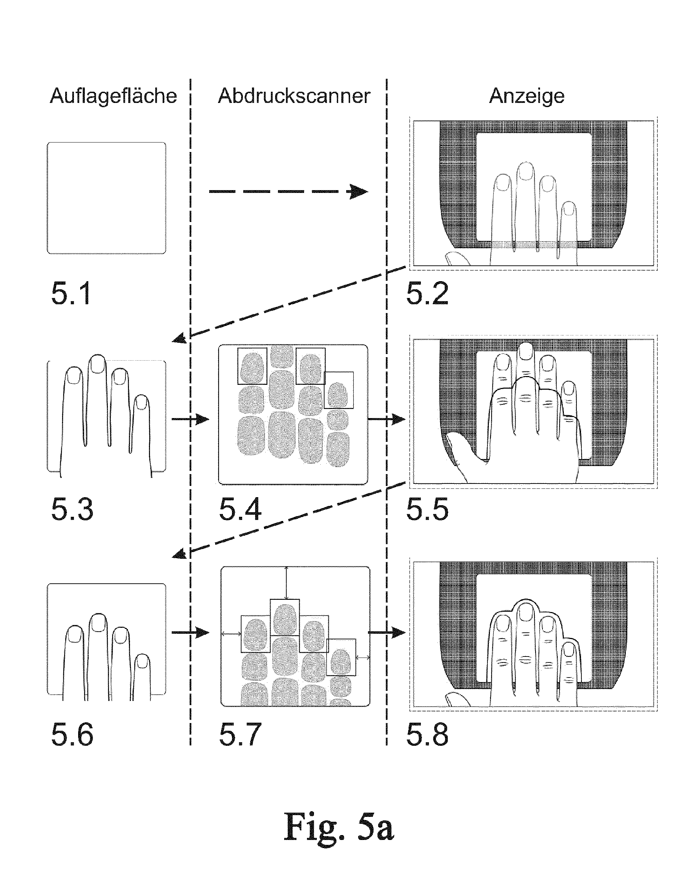

Fig. 5a stellt vier aufgelegte Finger 12 der rechten Hand dar, die in der Höhe (d. h. in der vertikalen Dimension der Bildaufnahme) nicht korrekt positioniert sind (Bild 5.3). In diesem Fall ragen die Finger 12 über die obere Begrenzung der Aufnahmefläche 11 hinaus. Die Sensorabtastung erfasst hierbei insgesamt vier Objekte (Finger 12, von denen nur die ersten Fingerglieder bezüglich ihrer Größe ausgewertet werden), wobei lediglich drei Objekte als vollständig aufgelegt erkannt werden (Bild 5.4), indem die Größe der erfassten Objekte mit den Sollwerten für eine Mindestgröße verglichen werden.

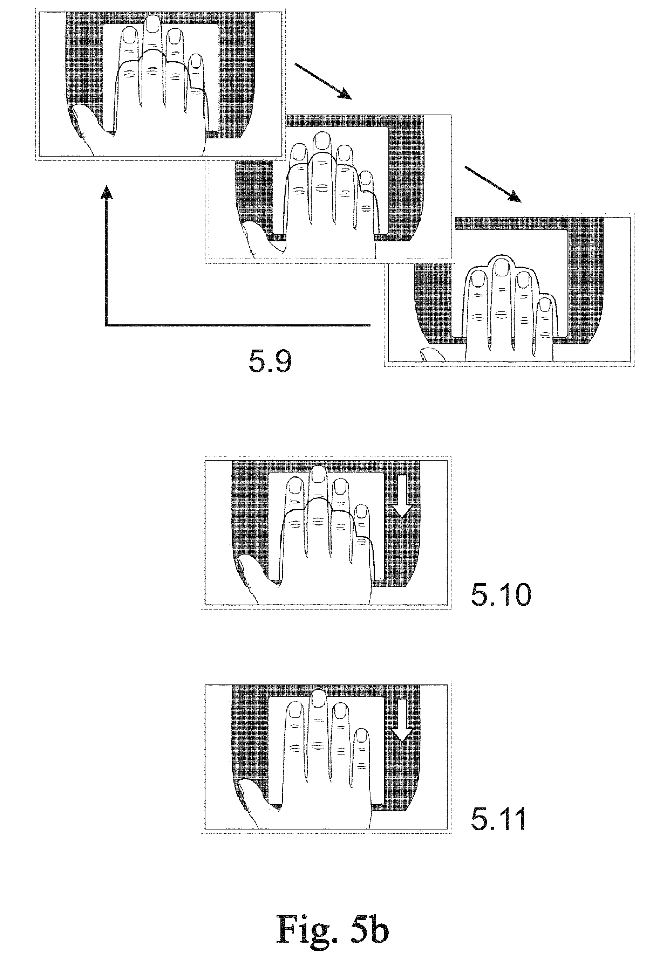

Bild 5.5 stellt die Aufforderung zur Korrektur der Positionierung der Finger 12 aus Bild 5.3 dar. Hierbei wird in einer Bildfolge der Benutzer animiert, seine Finger 12 entsprechend der optimalen Position auf der Aufnahmefläche 11 auszurichten. Dazu kann die in Fig. 5b im Bild 5.9 dargestellte Bildfolge verwendet werden. Die Anzahl der angezeigten Schritte (Bildsequenz) kann beliebig sein, in jedem Fall muss sie jedoch mindestens zwei Bilddarstellungen (falsche und richtige Fingerpositionierung) umfassen. Ebenfalls ist eine Darstellung ohne Überlagerung möglich, die nur die gewünschte Positionierung der Finger 12 anzeigt und somit dem Benutzer signalisiert, seine Finger 12 entsprechend der Anzeige auf der Anzeigeeinheit 4 aufzulegen.

In Fig. 5b sind alternative Darstellungen der Aufforderung zur Positionskorrektur dargestellt. Im Bild 5.10 wird der Benutzer durch Darstellung eines Handphantoms 43 für die richtige Fingerlage und eines Pfeils 47 für die Bewegungsrichtung zur korrekten Positionierung aufgefordert. Bild 5.11 stellt alternativ die Positionskorrektur nur mit einem Pfeil 47 dar, ohne dass die Handnachbildung 44 mit dem korrekt positionierten Handphantom 43 überlagert wird. Auch hier ist es im Sinne dieser Erfindung, dass sich die Pfeile 47 dynamisch mit der Korrektur der Position ändern und gegebenenfalls blinken oder ihre Farbe ändern.

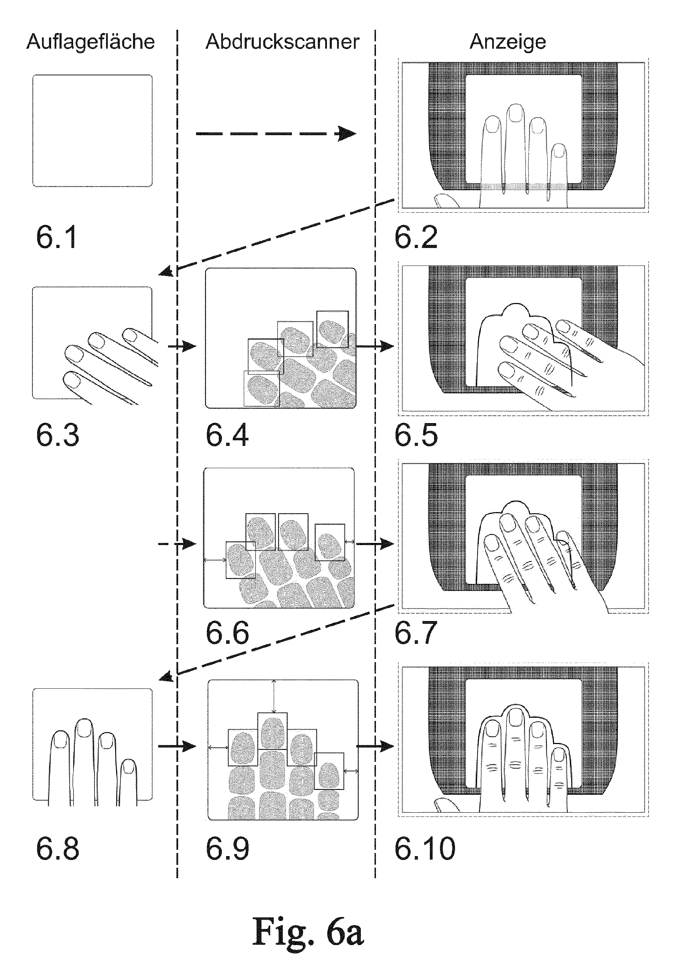

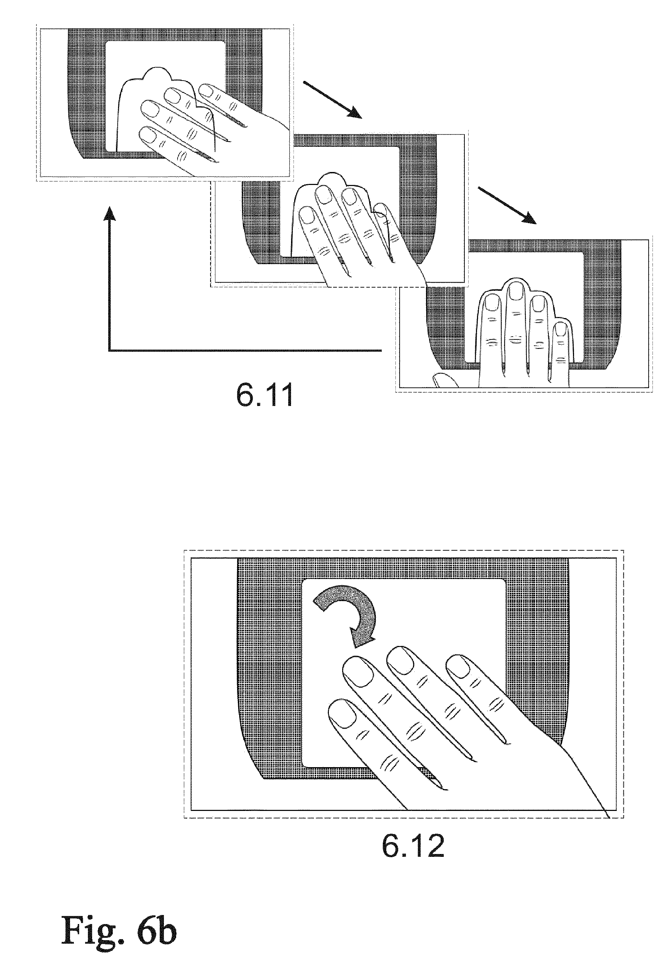

Ein weiteres Beispiel für eine nicht korrekte Positionierung der Finger 12 wird in Fig. 6a dargestellt. Hierbei befinden sich die Finger 12 in genügendem Abstand zum Rand der Aufnahmefläche 11 jedoch in nicht senkrechter bzw. paralleler Ausrichtung zu den Seitenkanten der Aufnahmefläche 11 (Bild 6.3). In Bild 6.4 ist die zugehörige Sensorabtastung und Bild 6.6 eine nachfolgende Auswertung nach anfänglicher Korrektur der Fingerposition dargestellt. Die Falschlage wird in der Bildverarbeitungseinheit 2 über die Größe (Fläche) der erkannten Objekte (erste Fingerglieder) mittels der bereits oben erwähnten umschreibenden Rechtecke 14 bestimmt, dann das Seitenverhältnis der Objekte berechnet und bei Nichterreichen eines vorher definierten Verhältnisses von Länge zu Breite der aufgelegten Objekte (Bild 6.9) genauer untersucht. Dazu wird das Größenverhältnis in gleicher Weise wie bereits oben bei der Größenberechnung zur Erkennung der Objekte ermittelt, und bei einer festgestellten Neigung der berechneten Trägheitsachse, die eine höhere Neigungsschwelle (z.B. ≥ 10°) erreicht oder überschreitet, der Benutzer zur Korrektur der Position der Finger 12 aufgefordert. Die Korrekturaufforderung kann in einer bevorzugten Variante gemäß den Bildern 6.5 und 6.7 durch die Überlagerung der aus dem Bildspeicher 3 generierten Hand mit Rotationsversatz 446 mit der Fingerumrisslinie 45 des Handphantoms 43 erfolgen. In Fig. 6b wird gemäß Bild 6.11 eine Möglichkeit der Aufforderung zur Positionskorrektur mittels auf der Anzeigeeinheit 4 wiederholt dargestellter Bildfolgen aus mindestens drei Bildern zur Rotation der Hand aufgefordert, bis die als Fingerumrisslinie 45 der Finger (Handphantom 43) angezeigte Endposition parallel zu den Seitenkanten der Aufnahmefläche 11 erreicht ist.

Bild 6.12 stellt eine alternative Anzeige zur Positionskorrektur aus Bild 6.11 dar. Hierbei wird durch Einblendung eines gebogenen Pfeils 47 zur Rotation der Hand aufgefordert. Dabei kann die Pfeillänge abnehmend dargestellt werden, je mehr sich die Hand der gewünschten Endposition nähert.

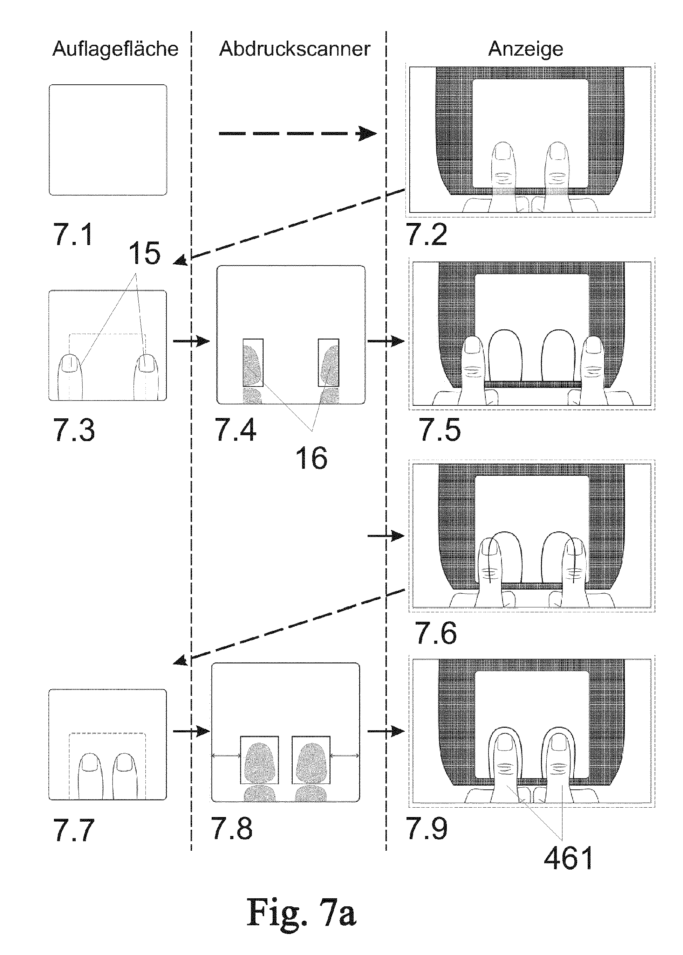

In Fig. 7a wird ein anderes Beispiel für zwei nicht korrekt positionierte Finger 12, in diesem Fall der Daumen 15 beider Hände, dargestellt. Bei leerer Aufnahmefläche 11 wird der Benutzer zuerst durch die Anzeigeeinheit 4, die ein Daumenphantom 48 mit zwei nebeneinander liegenden Daumendarstellungen zeigt, zur Auflage beider Daumen 15 animiert.
Beim Auflegen befinden sich in diesem Fall die Daumen 15 in nicht ausreichendem Mindestabstand zum Rand der Aufnahmefläche 11 (Bild 7.3). Für diese Fingerauflagesituation entspricht die erlaubte Aufnahmefläche 111 nicht der gesamten zur Verfügung stehenden Aufnahmefläche 11, sondern ist auf einen vordefinierten Ausschnitt beschränkt. Beispielhaft sei hier das im FBI-IQS-Standard genannte Aufnahmeformat für zwei Finger von 1,6 Zoll x 1,5 Zoll gewählt.

Bild 7.4 stellt die entsprechende Sensorabtastung dar, in der die Daumenabdrücke 16 außerhalb der erlaubten Aufnahmefläche 111 aufgefunden wurden. Auch in diesem Fall wird - wie in den vorherigen Beispielen in der Bildverarbeitungseinheit 2 durch Analyse der Grauwerte und Größe der Objekte deren aktuelle Position auf der (gesamten) Aufnahmefläche 11 bestimmt, diese Werte mit dem vordefinierten Aufnahmeformat der erlaubten Aufnahmefläche 111 verglichen und das Ergebnis entsprechend über die Anzeigeeinheit 4 an den Benutzer gemeldet (Bild 7.5). Die Bestimmung der Auflage der Daumen 15 außerhalb der erlaubten Aufnahmefläche 111 wird - wie in Bild 7.4 gezeigt - durch eine beschränkte Sensorauslesung (bekannt als ROI-Auslesung) oder eine nachträgliche Rückrechnung auf das Format der erlaubten Aufnahmefläche 111 ermittelt, wodurch sich zu kleine Flächen der abgeschnittenen Daumenabdrücke 16 ergeben, die einen vorgegebenen Schwellwert nicht erfüllen. Folgerichtig wird der Benutzer dann zur Korrektur aufgefordert, indem im Bild 7.5 und 7.6 eine versetzte Daumendarstellung 481 und zusätzlich zwei separate Fingerumrisslinien 45 angezeigt werden. Nach Verlagerung der Daumen 15 durch den Benutzer in die erlaubte Aufnahmefläche 111 (Bild 7.7) werden in der Sensordarstellung vollständige Daumenabdrücke 17 detektiert (Bild 7.8). Bild 7.9 zeigt dem Benutzer dann die korrekte Daumendarstellung 482.

Zur Abklärung, dass der Benutzer keine anderen zwei Finger 12 aufgelegt hat, können Vergleiche mit empirischen Schwellwerten für die Daumenfläche, mit den Flächengrößen der vorher aufgenommenen Finger 12 ( z. B. Zeige- oder Mittelfinger) oder ein direkter Vergleich mit den bereits gespeicherten Fingerabdrücken 13 vorgenommen werden

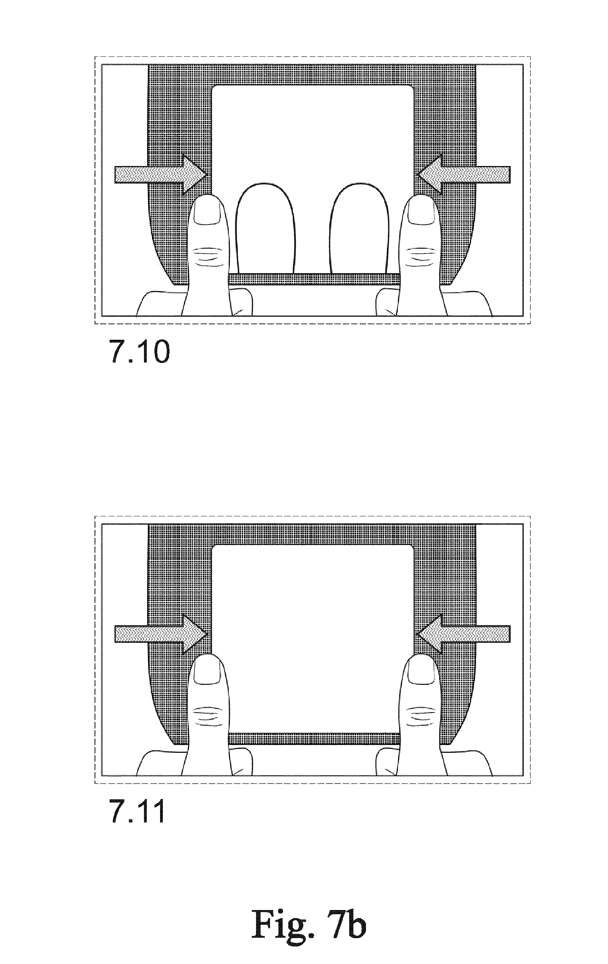

Die Aufforderung zur Korrektur der Daumenposition ist in den Bildern 7.5, 7.6 und 7.9 als eine Bildfolge dargestellt, wie sie der Benutzer bei Auflage der Daumen 15 auf die Aufnahmefläche 11 von Bild 7.3 bis Bild 7.7 bis zur korrekten Positionierung der Daumen 15 auf der Anzeigeeinheit 4 sieht. Diese Bilder können aber auch ohne die Änderung der Daumenpositionen gleich im Ergebnis der Sensorabtastung gemäß Bild 7.4 aus dem Bildspeicher 3 animiert werden. Die von der Sensorabtastung korrekt identifizierte Position der beiden Daumen 15 ist in Bild 7.8 dargestellt. Alternativ wird der Benutzer in Fig. 7b durch eine statische oder dynamische Darstellung des Pfeils 47 zur Positionskorrektur aufgefordert (Bild 7.10 mit Überlagerung, Bild 7.11 ohne Überlagerung).

### 3. Parameter: Korrekter Druck der Finger

Wie bereits oben erwähnt, ist der Druck, der auf die aufzunehmenden Finger 12 ausgeübt wird, eine effektive Möglichkeit, den optimalen Kontrast für einen qualitativ ausreichenden Fingerabdruck 13 zu generieren. Ein hinreichender Kontrast ist anderseits Voraussetzung für das Generieren einer Maske in Form eines den Fingerabdruck 13 umschreibenden Rechtecks 14 sowie das anschließende Auffinden der Minutien zum Vergleich von Fingerabdrücken mit denen aus einer Datenbank 6.
Es kommt also ganz besonders darauf an, eine Rückmeldung für den Benutzer des Fingerabdruckscanners 5 bereitzustellen, die den Kontrast der aufgelegten Finger 12 in Echtzeit ermittelt sowie daraus eine leicht verständliche Anzeige der vorzunehmenden Korrektur des Auflagedruckes für den Benutzer generiert. Diese Rückmeldung muss so erfolgen, dass der unerfahrene Benutzer sofort begreift, wie der Druck auf die Finger 12 zu verändern ist, um den Fingerabdruck 13 mit hoher Qualität aufzunehmen, ohne dass der Benutzer irgendeine Kenntnis von den oben beschriebenen Zusammenhängen der Kontrastoptimierung haben muss.

In der Fig. 8a wird angenommen, dass der Benutzer vier Finger 12 auf der Aufnahmefläche 11 platziert hat (Bild 8.1). Es wird davon ausgegangen, dass - wie die Sensorabtastung in Bild 8.2 zeigt - nicht genügend Druck ausgeübt wird. Die Bildverarbeitungseinheit 2 analysiert den Kontrast des Fingerabdrucks 13 auf Basis der zuvor vorgenommenen Segmentierung von vier Objekten (erste Fingerglieder). Dazu kann jedes Pixel des Objekts in ein Histogramm aufgenommen und aus diesem Histogramm Dunkelpixelanteil (Dunkelpixel z. B. > 40 % Intensitätsschwächung gegenüber durchschnittlicher Intensität der Hellpixel) und Standardabweichung bestimmt werden. Durch Vergleich der Dunkelpixel mit einem vorbestimmten Schwellwert sowie Vergleich der Standardabweichung, ob diese in einem vordefinierten Wertebereich liegt, wird für jedes der vier erkannten Objekte (Abdrücke der ersten Fingerglieder) der Kontrast als "zu hell", "gut" oder "zu dunkel" bewertet. Das Ergebnis wird durch die Anzeigeeinheit 4 dem Benutzer angezeigt.

In bevorzugter Weise wird der ideale Druck als eine vergrößerte Fingerumrisslinie 45 um die Finger der korrekten Handdarstellung 46 angezeigt, die eine der Fingerform angepasste (d. h. vergrößerte ähnliche) Form aufweist. In Bild 8.3 ist dargestellt, dass zu wenig Druck ausgeübt wird. Diese Darstellung wird aus den detektierten Fingerabdrücken 13 mit zu niedrigem Kontrast 18 (Bild 8.2) generiert, indem um die aus der Sensorabtastung abgeleitete Handdarstellung 46 herum ein Bereich in der Art einer Fingeraura 451 (bzw. eines Fingerschattens) angezeigt wird, die in diesem Fall kleiner als die eingeschlossene Fläche einer vergrößerten Fingerumrisslinie 45, die den optimalen Kontrast kennzeichnet, abgebildet wird. Dadurch wird signalisiert, mehr Druck auszuüben, um den richtigen Kontrast zu erreichen, der die eingeschlossene Fläche der Fingerumrisslinie 45 ausfüllt. Die Anzeigeeinheit 4 kann dabei vermitteln, dass der optimale Druck erreicht ist, wenn Füllfarbe (bzw. Füllmuster) die vergrößerte Fingerumrisslinie 45 erreicht (Bild 8.11). Um dieses Endergebnis zu erreichen, werden kontinuierlich die Parameter Dunkelpixel und Standardabweichung (des vordefinierten Grauwerts der Intensität) von der Bildverarbeitungseinheit 2 analysiert und die Ergebnisse als spezielles Äquivalent einer Druckanzeige auf der Anzeigeeinheit 4 dargestellt. Die druckäquivalente Darstellung wird dann um die Finger der Handdarstellung 46 als ein farbiger Bereich dargestellt, der umso breiter um die Handdarstellung 46 dargestellt wird, je größer der mit dem Finger 12 ausgeübte Druck auf der Aufnahmefläche 11 ist. Werden die Finger 12 mit zu wenig Druck aufgelegt, ist der angezeigte farbige (oder gemusterte) Bereich kleiner als die vorgegebene Fingerumrisslinie 45 für den optimalen Druck (Bild 8.3).

Bild 8.5 zeigt den Fall, dass zu viel Druck auf alle Finger 12 ausgeübt wird. Die vom Sensor detektierten Objekte werden wiederum in einem Histogramm auf die Schwellwerte von Dunkelpixeln und Standardabweichung untersucht, wobei die Ergebnisse in Bild 8.4 als Fingerabdrücke mit zu hohem Kontrast 19 (Druck) dargestellt sind. In diesem Fall wird die Füllfarbe (bzw. das Füllmuster) um die angezeigte Handdarstellung 46 bis über die vergrößerte Fingerumrisslinie 45 hinausgehend ausgedehnt und damit eine zu hohe Fingeraura 452 dargestellt (Bild 8.5) und dem Benutzer damit signalisiert, weniger Druck auf die Finger 12 auszuüben.

Da die Auswertung der Fingerabdrücke 13 der einzelnen Finger 12 separat erfolgt, ist auch eine Anzeige des Drucks der individuellen Finger 12 möglich und verständlich darstellbar (siehe Bild 8.6 bis 8.9). In Bild 8.6 wird am Zeigefinger ein zu hoher Kontrast (Druck) ermittelt. Deshalb ist in Bild 8.7 um den Zeigefinger die Fingerumrisslinie 45 für den optimalen Druck bereits überschritten, währenddessen auf die restlichen Finger 12 der korrekte Druck ausgeübt wird. Entsprechend der Anzeige von Bild 8.7 muss der Druck mit dem Zeigefinger auf der Aufnahmefläche 11 verringert werden. Im Gegensatz dazu wird in Bild 8.8 am Ringfinger ein zu geringer Kontrast (Druck) ermittelt. Deshalb wird in Bild 8.9 um den Ringfinger die Fingerumrisslinie 45 des optimalen Drucks nicht erreicht, während bei den restlichen Fingern 12 Fingerabdrücke mit dem richtigen Kontrast 20 festgestellt werden, sodass der korrekte Druck vorliegt und nicht korrigiert zu werden braucht. Somit muss - gemäß der Anzeige in Bild 8.9 - nur auf den Ringfinger noch mehr Druck ausgeübt werden, um den idealen Druck (und damit Kontrast) in der Sensorabtastung (Bild 8.10) und die "gut"-Anzeige gemäß Bild 8.11 zu erzielen.

Bild 8.11 zeigt die Darstellung auf der Anzeigeeinheit 4, wenn der optimale Druck (oder Kontrast) erreicht ist, dem die in Bild 8.10 dargestellte Sensorabtastung bei Fingerabdrücken mit richtigem Kontrast (Druck) 20 vorausgeht. Hierbei ist der gesamte Bereich um die Finger bis zur vergrößerten Fingerumrisslinie 45 mit der Füllfarbe (hier als Punktmuster dargestellt) ausgefüllt, wodurch die optimale Fingerabdruckaura 453 angezeigt wird.

Eine Darstellung des Drucks einzelner Finger ist in Fig. 8b abgebildet. In Bild 8.12 wird durch den Zeigefinger der rechten Hand zu wenig Druck ausgeübt. Bild 8.16 zeigt den konträren Fall, dass auf den Zeigefinger der rechten Hand zu viel Druck ausgeübt wird.
Es versteht sich im Sinne dieser Erfindung, dass die Darstellung über zu viel oder zu wenig Druck dynamisch mit einer Druckänderung der Finger 12 dargestellt wird. Die Bilder 8.12 bis 8.16 zeigen Beispielbilder einer Sequenz zur Darstellung von zu wenig Druck (Bild 8.12, 8.13), für den richtigen Druck (Bild 8.14) und für zuviel Druck (Bild 8.15, 8.16).

In Fig. 8c zeigt Bild 8.17 eine alternative Darstellung als Animation für den Benutzer des Fingerabdruckscanners 5 zur Erhöhung des Drucks des Fingers 12 auf die Aufnahmefläche 11, wobei der zu geringe Druck in Form einer stilisierten Analoganzeige als Manometer mit niedriger Druckanzeige 471 graphisch veranschaulicht wird. Bild 8.18 fordert dagegen zur Verringerung des Drucks auf, indem ein Manometer mit hoher Druckanzeige 472 dargestellt ist. Bei kontinuierlicher Druckerhöhung (-erniedrigung) wird der Manometerzeiger steigend (fallend) dargestellt.

Bild 8.19 ist eine weitere alternative Darstellung für den vorliegenden bzw. auszuübenden Druck. In diesem Fall wurde der korrekte Druck auf den Finger 12 ausgeübt. Die Anzeige gibt dabei das mit dem Aufpressen des Fingers 12 erreichte Druckniveau mittels eines vertikal verschiebbaren Pfeils 47 neben einer einheitslosen Skala 473 an.

### 4. Parameter: Bewegung der Finger

Die durchschnittliche Bildaufnahmezeit für ein einzelnes Bild der aufgelegten Finger beträgt etwa 200 ms bis 300 ms. Zur Beurteilung einer ausreichend guten Fingerabdruckqualität durch die Bildverarbeitungseinheit 2 hinsichtlich Kontrast, Zahl und Lage der Finger 12 werden etwa 1 bis 2 Sekunden benötigt; d. h. es werden ca. 5 bis 10 Einzelbilder ausgewertet. In diesem Zeitraum ist es erforderlich, dass die Finger 12 sich auf der Aufnahmefläche 11 nicht bewegen.
Auf der Aufnahmefläche 11 bewegt aufgelegte Finger 12 werden in der Fig. 9a dargestellt. In Bild 9.1 wird angenommen, dass vier Finger 12 auf der Aufnahmefläche 11 platziert sind aber bewegt werden. Es liegt somit eine kontinuierliche Positionsänderung der Finger 12 vor. Die Positionsänderung wird von der Bildverarbeitungseinheit 2 durch Auswertung der Grauwerte analysiert und als Rückmeldung an die Anzeigeeinheit 4 übertragen. Hierbei wird die Ortslage der erfassten Fingerabdrücke 13 über eine definierte Zeitspanne zur ersten Position vergleichen. Sollte sich die Position innerhalb der festgelegten Anzahl der zu vergleichenden Ortslagen nicht verändern, so wird davon ausgegangen, dass sich die Finger 12 nicht bewegen. Die Bilder 9.2, 9.3, 9.5 und 9.7 sollen beispielhaft diesen Vergleich bei einer angenommenen Bewegung der Finger 12 darstellen. Hierzu ist die erste Ortslage der erfassten Objekte in Bild 9.2 ermittelt worden. Das Bild 9.3 der erfassten Objekte wird mit der ersten Ortslage (aus Bild 9.2) verglichen. Dabei wird eine Verschiebung der Ortslage festgestellt (in Bild 9.3 ist die erste Ortslage durch eine blassere Schraffur dargestellt). Eine dritte Ortslage der Finger 12 ist in Bild 9.5 dargestellt. Diese wird mit der zweiten Ortslage aus Bild 9.3 verglichen. Dabei wird wiederum eine Verschiebung der Ortslage festgestellt und eine vierte, in Bild 9.7 dargestellte Ortslage erfasst. Diese wird mit der dritten Ortslage aus Bild 9.5 verglichen, wobei keine Veränderung der Ortslage mehr festgestellt wird. Es wird davon ausgegangen, dass sich nun die Ortslage der aufgelegten Finger 12 nicht mehr ändert (die Finger sich 12 nicht mehr bewegen) und das im Folgenden die Ortslagen aus Bild 9.5 und 9.7 konstant bleiben. Diese sich nicht mehr verändernde Ortslage aus drei nacheinander folgenden Sensorabtastungen wird als ruhige Lage der Finger 12 bewertet.

Bilder 9.4 und 9.6 stellen beispielhaft die Rückmeldung für das Bewegen der Finger 12 dar. Dabei wird die Umrandung der Hand mit Bewegungssimulation 447 in einer Überlagerung von zwei Handdarstellungen gezeigt. Diese Überlagerung kann in mehreren Stufen erfolgen. Durch diese überlagerte Darstellung wird beim Benutzer eine Unschärfe der aufgelegten Finger 12 und somit eine Bewegung der Finger 12 symbolisiert. Diese Überlagerung kann, wie in Fig. 9b (oben) dargestellt, durch verschiedene Transparenzstufen oder aber auch durch verschiedene Farben oder Farbabstufungen und sowohl horizontal (Bild 9.10) als auch vertikal (Bild 9.12) in beide Richtungen erfolgen. Sobald sich die Lage der Finger 12 in einer definierten Zeitperiode nicht ändert, wird die Überlagerung der dargestellten Finger 12 aus Bild 9.10 oder 9.12 beendet und die korrekt aufgelegten Finger 12 gezeigt (Bild 9.11).
Die Bilder 9.13 bis 9.15 stellen eine alternative Rückmeldung zur Information über bewegte Finger 12 durch eine sich ändernde Anzahl von konzentrischen Kreisbögen 474 zur Vibrationsanzeige um eine animierte Handdarstellung 46 dar. Diese konzentrischen Kreisbögen 474 können sich entsprechend der Stärke der Positionsänderung der Finger 12 dynamisch ändern. Dabei werden umso mehr konzentrische Kreisbögen 474 angezeigt, je größer die Bewegung ist. Im vorliegenden Beispiel wird angenommen, dass sich die aufgelegten Finger 12 (Bild 9.1) zunächst stark in ihrer Position verändern (Bild 9.13) und die Positionsänderung abnimmt (Bild 9.14 und 9.15) bis zu einer stabilen Lage der Finger 12, in der durch die Bildverarbeitungseinheit 2 keine Positionsänderung mehr analysiert wird (Bild 9.11).

### 5. Parameter: Richtige Hand

Voraussetzung für einen möglichst flüssigen Ablauf des Fingerabdruckaufnahmeprozesses ist vor allen Dingen, dass die Benutzer die richtige Hand auflegen. Ein häufiges Problem stellt die Verwechslung von rechter und linker Hand dar, insbesondere bei gleichzeitigem Auflegen der vier Finger einer Hand. Es ist eine Lösung gefragt, die es ermöglicht, zwischen rechter und linker Hand zu unterscheiden und den Benutzer leicht verständlich zum Wechseln der Hand aufzufordern.

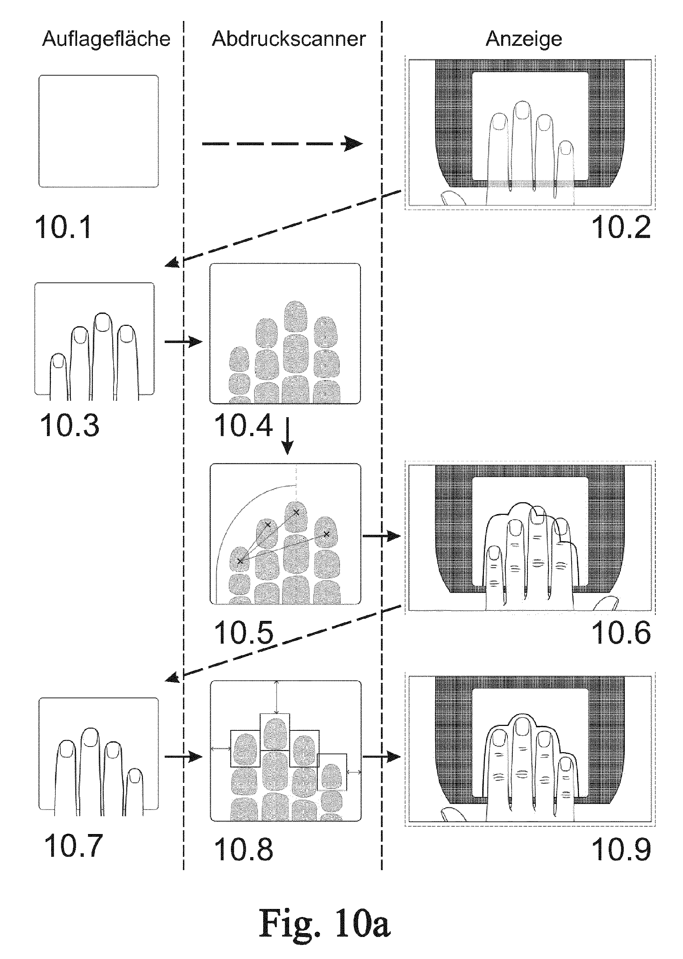

In Fig. 10a wird beispielhaft davon ausgegangen, dass der Benutzer aufgefordert wird, die vier Finger 12 der rechten Hand aufzulegen (Bild 10.2), jedoch die linke Hand (falsche Hand 448) aufgelegt wird (Bild 10.3). Die vier Objekte werden in der Aufnahmeeinheit 1 bei der Sensorabtastung erfasst (Bild 10.4) und in der Bildverarbeitungseinheit 2 durch Analyse der Winkel der Fingerabdrücke 13 zueinander (Bild 10.5) festgestellt, dass die falsche Hand 448 aufgelegt wurde, und daraufhin eine Rückmeldung an die Anzeigeeinheit 4 übertragen (Bild 10.6). Hierbei liegt der Analyse die Tatsache zugrunde, dass die Finger 12 der Hand eines Menschen immer in einem typischen Verhältnis zueinander stehen (siehe beispielsweise Buryanov A., Kotiuk V., Proportions of Hand Segments, Int. J. Morphol., 28(3): 755-758, 2010). Davon ausgehend wird ein vorher definiertes Winkelverhältnis 21 der am weitesten links liegenden Fingerabdrücke 13 zu den restlichen Fingerabdrücken gegenüber dem mittleren Winkel der gesamten Hand bestimmt und mit dem aus den aufgelegten Fingern 12 bestimmten Winkelverhältnis 21 durch Sensorabtastung der Aufnahmeeinheit 1 berechnet (Bild 10.5). Sollte das sich aus den aufgelegten Fingern 12 ergebende Winkelverhältnis 21 nicht mit dem vordefinierten Winkelverhältnis übereinstimmen, wird davon ausgegangen, dass die falsche Hand 448 aufgelegt und somit das entsprechende Template der falschen Hand 448 aus dem Bildspeicher 3 abgerufen wurde und in der Anzeigeeinheit 4 zur Anzeige gebracht werden muss.

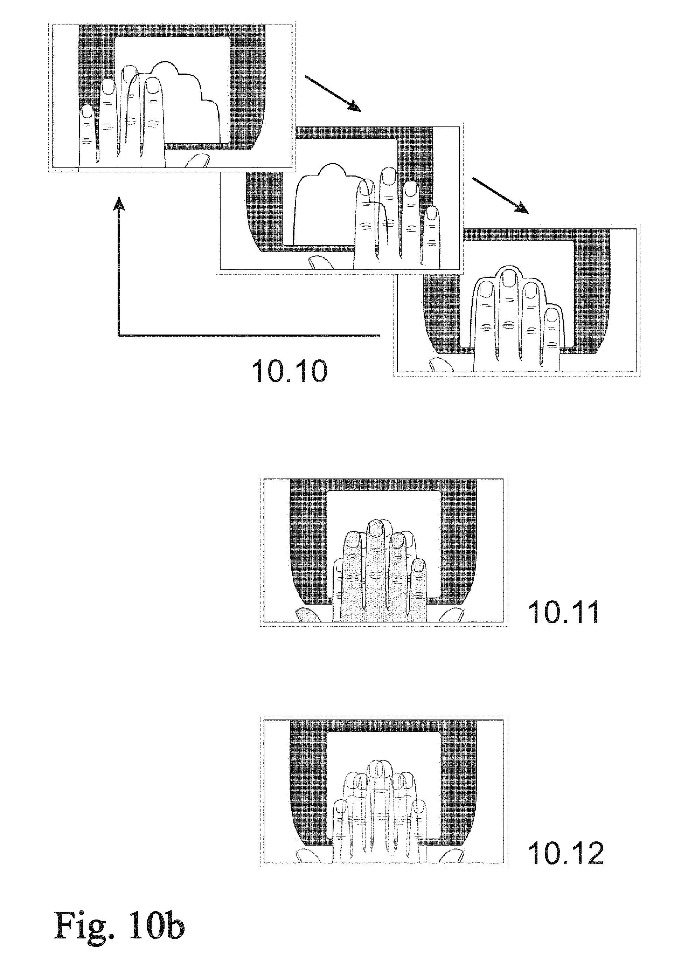

In Fig. 10b werden alternative Anzeigen zu Bild 10.6 aus Fig. 10a dargestellt, die dem Benutzer signalisieren, dass die falsche Hand 448 aufgelegt wurde. Dabei wird der gewünschte Zustand durch eine Fingerumrisslinie 45 dargestellt und die falsch aufgelegte Hand 448 als Überlagerung dazu. In Bild 10.10 ist eine Animation dargestellt, die dem Benutzer signalisiert, die richtige Hand 449 aufzulegen. Dabei bewegt sich in einer Bildsequenz die falsch aufgelegte Hand 448 aus der Fingerumrisslinie 45 heraus und die korrekte Handdarstellung 46 in die Fingerumrisslinie 45 hinein, bis sich die korrekte Handdarstellung 46 innerhalb der Fingerumrisslinie 45 befindet. Dies geschieht so lange, bis durch die Bildverarbeitungseinheit 2 eine Übereinstimmung des Winkelverhältnisses 21 zwischen geforderter Hand und aufgelegter Hand analysiert wird. Bei erfolgreichem Auflegen der richtigen Hand 449 (Bild 10.7 aus Fig. 10a) und entsprechender Sensorabtastung (Bild 10.8) wird das dem Benutzer durch die Anzeigeeinheit 4 mitgeteilt, wie beispielsweise in Bild 10.9 dargestellt. In diesem Fall befindet sich die aufgelegte Hand innerhalb der Fingerumrisslinie 45.
Anstatt einer Fingerumrisslinie 45 kann die Darstellung der geforderten Hand auch durch eine andersfarbige oder transparente richtige Hand 449 erfolgen, mit der dann eine Überlappung mit den aufgelegten Fingern 12 der realen Handdarstellung 46 erreicht werden muss (Bild 10.11 oder 10.12).

Die Reihenfolge der vorstehend beurteilten Parameter sowie der Informationen, die dem Benutzer angezeigt werden, ist beliebig kombinierbar und die in der Beschreibung gewählte Reihenfolge und Art der Anzeige stellen keine Beschränkung der Erfindung dar. Fingerabdrücke 13 im Sinne dieser Erfindung umfassen Einzelfinger oder jegliche Kombinationen von mehreren Fingern 12. Im weiteren Sinne umfasst die Erfindung sowohl flache als auch abgerollte Fingerabdrücke.
Der Schwerpunkt der Beurteilung für eine hohe Bildqualität der Fingerabdrücke 13 erfolgt nach dem Druck, mit dem der Benutzer die Finger 12 auf die Aufnahmefläche 11 presst. Es können aber ebenso andere Parameter bevorzugt oder aber einzelne Parameter aus der Beurteilung der Bildverarbeitungseinheit 2 und/oder der Darstellung auf der Anzeigeeinheit 4 ausgespart werden, ohne dass dadurch die grundlegende Lehre der Erfindung verlassen wird.

### Bezugszeichenliste

- 1: Aufnahmeeinheit
- 11: Aufnahmefläche
- 111: erlaubte Aufnahmeflache (für Daumen)
- 12: Finger
- 13: Fingerabdruck
- 14: umschreibendes Rechteck
- 15: Daumen
- 16: abgeschnittener Daumenabdruck
- 17: (vollständiger) Daumenabdruck
- 18: Fingerabdruck mit zu niedrigem Kontrast (Druck)
- 19: Fingerabdruck mit zu hohem Kontrast (Druck)
- 20: Fingerabdruck mit richtigem Kontrast (Druck)
- 21: Winkelverhältnis (für linke/rechte Hand)
- 2: Bildverarbeitungseinheit
- 3: Bildspeicher
- 4: Anzeigeeinheit
- 41: stilisierte Geräteoberfläche
- 42: stilisierte Aufnahmefläche
- 43: Handphantom
- 44: Handnachbildungen (Template)
- 441: Hand mit fehlendem Finger
- 442: Hand mit andersfarbigem Finger
- 443: Hand mit gestricheltem Finger
- 444: Hand mit gespreizten Fingern
- 445: Hand mit überstehenden Fingern
- 446: Hand mit Rotationsversatz
- 447: Hand mit Bewegungssimulation
- 448: falsche Hand
- 449: (versetzte) richtige Hand
- 45: (vergrößerte) Fingerumrisslinie
- 451: zu niedrige Fingeraura (zu geringer Kontrast)
- 452: zu hohe Fingeraura (zu hoher Kontrast)
- 453: optimale Fingeraura (richtiger Kontrast)
- 46: korrekte Handdarstellung
- 47: Pfeil
- 471: Manometer mit niedriger Druckanzeige
- 472: Manometer mit hoher Druckanzeige
- 473: einheitslose Skala
- 474: konzentrische Kreisbögen zur Vibrationsanzeige
- 48: Daumenphantom
- 481: versetzte Daumendarstellung
- 482: korrekte Daumendarstellung
- 5: Fingerabdruckscanner
- 6: Datenbank

## Patentansprüche

1. Verfahren zur Aufnahme von Fingerabdrückenn (13) auf Basis von Fingerabdruckscannern (5) in ausreichend hoher Qualität enthaltend die folgenden Schritte:
- Aufnehmen von Fingerabdrücken (13) von auf einer Aufnahmefläche (11) aufgelegten Fingern,
- Analysieren von Anzahl und Lage der relevanten Objekte der Sensorabbildung,
- Vergleichen der Ist-Positionen und -Anzahl mit den Soll-Vorgaben für die Position, Anzahl und Art der Fingerabdrücke (13);
- Zugreifen auf einen Bildspeicher (3) mit einer Bibliothek aus einer Vielzahl von animierten Bildern für unterschiedlichste Zustände von auf der Aufnahmefläche (11) aufgelegten Fingern (12) sowie für die Soll-Vorgaben, und
- Auswählen von Bildern oder Bildfolgen, die eine fehlerhafte Fingerauflage entsprechend der Objektanalyse als positive Fingerabbildung darstellen und
- Anzeigen der positiv konvertierten Fingerabbildung auf einer in unmittelbarer Nähe der Aufnahmefläche (11) positionierten Anzeigeeinheit (4) in Form von zweidimensionalen Bildern.

2. Verfahren nach Anspruch 1, wobei zur Analyse der Anzahl und Lage der Fingerabdrücke (13) als relevante Objekte der Sensorabbildung jeweils Abdrücke der ersten Fingerglieder als Dunkelpixelgebiete gesucht und mit umschreibenden Rechtecken (14), deren Lage mit Schwerpunkt, Fläche und Ausrichtung ermittelt wird, versehen werden, um den Vergleich mit den Soll-Vorgaben vorzunehmen.

3. Verfahren nach Anspruch 2, wobei die ermittelte Abweichung von der Anzahl der Fingerglieder der Soll-Vorgaben zur Ergänzung einer entsprechenden Fingerdarstellung aus der Bibliothek des Bildspeichers (3) ausgewählt wird.

4. Verfahren nach Anspruch 3, wobei fehlende Finger durch die Soll-Vorgaben ergänzt und mit abweichender Mustergestaltung zur Anzeige gebracht werden.

5. Verfahren nach Anspruch 4, wobei die abweichende Mustergestaltung aus unterschiedlichen Begrenzungslinienarten, Schraffuren, Füllfarben oder Füllmustern ausgewählt wird.

6. Verfahren nach Anspruch 1, wobei fehlende Teile von Fingerabdrücken, die durch Randüberschreitung der Aufnahmefläche (11) entstehen, in Kenntnis des übrigen Fingerverlaufs durch gegenläufig gerichtete Pfeile (47) zur Anzeige gebracht werden.

7. Verfahren nach Anspruch 1, wobei zusätzlich Abweichungen im Verhältnis von Länge zu Breite der als Objekt erkannten Fingerabdrücke (13) gegenüber den Soll-Vorgaben ermittelt werden, wodurch Schräglagen der Finger (12) erkannt und zur Anzeige gebracht werden.

8. Verfahren nach Anspruch 7, wobei fehlende Teile von Fingerabdrücken (13), die durch Randüberschreitung der Aufnahmefläche (11) entstehen, in Kenntnis des übrigen Fingerverlaufs ergänzt werden und durch eine die Fingerkontur vergrößert nachbildende Fingerumrisslinie (45) entsprechend der Soll-Vorgabe eine Korrekturanweisung zur Anzeige gebracht wird.

9. Verfahren nach Anspruch 7, wobei fehlende Größe oder fehlender Kontrast von Fingerabdrücken (13), die durch unzureichenden Druck auf der Aufnahmefläche (11) entstehen, durch Analyse von Grauwerthistogrammen, Standardabweichung und anschließende Schwellbewertung ermittelt werden.

10. Verfahren nach Anspruch 9, wobei fehlende Größe oder fehlender Kontrast von Fingerabdrücken (13), die durch unzureichenden Druck auf der Aufnahmefläche (11) entstehen, gegenüber den Soll-Vorgaben ermittelt und als vergrößerte Fingerumrisslinie (45) angezeigt werden, wobei ein jeden Fingerabdruck umgebender gemusterter Bereich in Abhängigkeit vom aufgewendeten Druck als eine den Finger (12) umgebende Fingerabdruckaura (451, 452, 453) angezeigt wird, die bei Erreichen der Fingerumrisslinie (45) den optimalen Anpressdruck auf der Aufnahmefläche (11) signalisiert.

11. Verfahren nach Anspruch 7, wobei eine falsche Ausrichtung von Fingerabdrücken (13), die durch schräge Auflage auf der Aufnahmefläche (11) entsteht, durch Analyse von Seitenverhältnissen eines umschreibenden Rechtecks (14) sowie Abstände zum Rand der Aufnahmefläche (11) ermittelt und durch rotierende Pfeile (47) zur Ansicht gebracht wird.

12. Verfahren nach Anspruch 7, wobei eine falsche Ausrichtung von Fingerabdrücken (13), die durch schräge Auflage auf der Aufnahmefläche (11) entsteht, durch Analyse von Seitenverhältnissen des umschreibenden Rechtecks (14) sowie Abstände zum Rand der Aufnahmefläche (11) ermittelt werden und durch eine die Fingerkontur vergrößert nachbildende Fingerumrisslinie (45) entsprechend der Soll-Vorgabe eine Korrekturanweisung zur Anzeige gebracht wird.

13. Verfahren nach Anspruch 1, wobei zusätzlich der Kontrast der Fingerabdrücke (13) durch Analyse von Grauwerthistogrammen, Standardabweichung und anschließende Schwellbewertung. gegenüber den Soll-Vorgaben ermittelt und als vergrößerte Fingerumrisslinie (45) angezeigt wird, wobei ein jeden Fingerabdruck (13) umgebender gemusterter Bereich in Abhängigkeit vom aufgewendeten Druck als den Finger (12) umgebende Fingerabdruckaura (451, 452, 453) angezeigt wird, die in der Fingerumrisslinie (45) den optimalen Anpressdruck auf der Aufnahmefläche (11) signalisiert.

14. Verfahren nach Anspruch 1, wobei zusätzlich der Kontrast der Fingerabdrücke (13) durch Analyse von Grauwerthistogrammen, Standardabweichung und anschließende Schwellbewertung gegenüber den Soll-Vorgaben ermittelt und als analoge Druckanzeige in Form einer beidseitig symmetrischen, linearen, einheitslosen Skala (473) auf der Anzeige dargestellt wird, wobei ein zu hoher Anpressdruck auf die Aufnahmefläche (11) durch Pfeilbewegung entlang der Skala (473) nach oben und ein zu niedriger Anpressdruck durch Pfeilbewegung nach unten signalisiert wird.

15. Verfahren nach Anspruch 1, wobei zusätzlich die Ruhiglage der Finger (12) durch Analyse von Abstandsverhältnissen von den Rändern der Aufnahmefläche (11) über ein definiertes Zeitintervall überwacht wird, indem Schwerpunktlagen der ermittelten Fingerabdrücke (13), die nicht für mehr als drei Folgebilder konstant sind als Doppelanzeigen der Hand zur Anzeige kommen.

16. Verfahren nach Anspruch 1, wobei zusätzlich die Ruhiglage der Finger (12) durch Analyse von Abstandsverhältnissen von den Rändern der Aufnahmefläche (11) über ein definiertes Zeitintervall überwacht wird, indem Schwerpunktlagen der ermittelten Fingerabdrücke (13), die nicht für mehr als drei Folgebilder konstant sind, als Anzahl konzentrischer Kreisbögen (474) neben der Handanzeige zur Anzeige gebracht werden.

17. Verfahren nach Anspruch 15 oder 16, wobei Schwerpunktlagen der ermittelten Fingerabdrücke (13), die sich innerhalb von 750 ms um mehr als 15 Pixel verschieben, als Bewegung zur Anzeige gebracht werden.

18. Anordnung zur Aufnahme von Fingerabdrücken (13) auf Basis von Fingerabdruckscannern (5) in ausreichend hoher Qualität, in der eine Aufnahmeeinheit (1) für hochaufgelöste Fingerabdrücke (13) und eine nachgeordnete Bildverarbeitungseinheit (2) zur Analyse von einfachen Qualitätskriterien vorgesehen ist, um nur qualitativ hochwertige Fingerabdrücke (13) an eine Datenbank (6) weiterzuleiten, **dadurch gekennzeichnet, dass**
- ein Bildspeicher (3) mit einer Bibliothek aus einer Vielzahl von animierten Fingerpositionsbildern vorhanden ist,
- der Aufnahmeeinheit (1) eine zweidimensionale Anzeigeeinheit (4) zugeordnet ist, die zur Anzeige der animierten Fingerpositionsbilder aus dem Bildspeicher (3) in Abhängigkeit von Ergebnissen der in der Bildverarbeitungseinheit (2) analysierten Fingerabdrücke (13) ausgebildet ist,
- wobei die Anzeigeeinheit (4) zur Anzeige der animierten Fingerpositionsbilder durch positive Echtzeitdarstellungen der tatsächlich auf der Aufnahmefläche (11)der Aufnahmeeinheit (1) aufgelegten Finger (12) zur einfachen Benutzerführung vorgesehen ist.
